(19) **Europäisches Patentamt**
**European Patent Office**
**Office européen des brevets**

(11) **EP 3 803 806 B1**

(12) **FASCICULE DE BREVET EUROPEEN**

(45) Date de publication et mention de la délivrance du brevet:
**27.09.2023 Bulletin 2023/39**

(21) Numéro de dépôt: **19745664.3**

(22) Date de dépôt: **03.06.2019**

(51) Classification Internationale des Brevets (IPC):
**G06T 19/20** *(2011.01)*

(52) Classification Coopérative des Brevets (CPC):
**G06T 19/20;** G06T 2210/41; G06T 2219/2021

(86) Numéro de dépôt international:
**PCT/FR2019/051298**

(87) Numéro de publication internationale:
**WO 2019/234335 (12.12.2019 Gazette 2019/50)**

(54) **PROCEDE POUR PRODUIRE UNE REPRESENTATION NUMERIQUE POUR FABRIQUER UN APPAREIL POUR UN CORPS VIVANT ET DISPOSITIF CORRESPONDANT**

VERFAHREN ZUR HERSTELLUNG EINER DIGITALEN DARSTELLUNG ZUR HERSTELLUNG EINES GERÄTES FÜR EINEN LEBENDEN KÖRPER UND ENTSPRECHENDE VORRICHTUNG

METHOD FOR PRODUCING A DIGITAL REPRESENTATION FOR PRODUCING AN APPLIANCE FOR A LIVING BODY AND CORRESPONDING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2018 FR 1854857**

(43) Date de publication de la demande:
**14.04.2021 Bulletin 2021/15**

(73) Titulaire: **Proteor**
**21850 Saint-Apollinaire (FR)**

(72) Inventeurs:
• **COLOBERT, Briac**
**21000 Dijon (FR)**
• **GESBERT, Jean-Charles**
**35480 Saint Malo de Phily (FR)**
• **CARRÉ, Vincent**
**21470 Brazey-en-Plaine (FR)**

(74) Mandataire: **Fédit-Loriot**
**22, rue du Général Foy**
**75008 Paris (FR)**

(56) Documents cités:
• **JULIEN CLIN ET AL: "Correlation Between Immediate In-Brace Correction and Biomechanical Effectiveness of Brace Treatment in Adolescent Idiopathic Scoliosis :", SPINE : AN INTERNATIONAL JOURNAL FOR THE STUDY OF THE SPINE, vol. 35, no. 18, 1 août 2010 (2010-08-01), pages 1706-1713, XP055562214, US ISSN: 0362-2436, DOI: 10.1097/BRS.0b013e3181cb46f6**
• **M. LI ET AL: "Could clinical ultrasound improve the fitting of spinal orthosis for the patients with AIS?", EUROPEAN SPINE JOURNAL, vol. 21, no. 10, 1 octobre 2012 (2012-10-01), pages 1926-1935, XP055562200, DE ISSN: 0940-6719, DOI: 10.1007/s00586-012-2273-4**

**EP 3 803 806 B1**

**Description**

Domaine Technique:

L'invention a pour objet un procédé pour produire une représentation numérique pour fabriquer un appareil pour un corps vivant, notamment destiné à être appliqué contre la surface externe du corps vivant.

L'invention est plus particulièrement destinée à la fabrication d'orthèses et de prothèses. Une orthèse est un appareil qui est appliqué extérieurement à une partie du corps pour corriger une déformation, améliorer la fonction ou soulager les symptômes d'une maladie en soutenant ou en aidant le système -neuro-musculo-squelettique. Une prothèse est un appareil qui remplace une partie du corps manquante.

Art Antérieur:

Les prothèses et les orthèses sont généralement réalisées sur mesure pour optimiser leur efficacité et leur confort. Ces appareils sont aujourd'hui couramment produits à partir de représentations tridimensionnelles de la forme externe d'une partie d'un corps humain ou animal. Cette représentation tridimensionnelle de la forme externe est ensuite utilisée pour former un modèle tridimensionnel d'un moule de l'appareil ou de l'appareil.

En général, les procédés de réalisation de ces modèles 3D (en trois dimensions) n'utilisent pas de représentation de la structure interne : le modèle résultant ne prend donc pas en compte la structure interne du patient, ce qui peut conduire à la réalisation d'appareils dont les appuis sont trop importants sur certaines parties du corps, ou au contraire pas assez marqués. "Correlation Between Immédiate In-Brace Correction and Biomechanical Effectiveness of Brace Treatment in Adolescent Idiopathic Scoliosis" par JULIEN CLIN ET AL décrit la génération d'un modèle de corps spécifique à un patient et la simulation numérique de l'effet du port d'un corset à l'aide de ce modèle.

Il existe encore des besoins pour améliorer l'adaptation de ces appareils au corps vivant et diminuer ainsi les risques de conflit entre l'appareil et les structures anatomiques du corps vivant. Il existe également encore des besoins pour améliorer la précision des appuis et l'efficacité de ces appareils.

Résumé De l'invention: A cet effet, l'invention est définie par les revendications indépendantes et en particulier propose un procédé pour produire une représentation numérique pour fabriquer un appareil pour une partie au moins d'un corps vivant, comprenant :

(1) recevoir un premier modèle en trois dimensions de la structure interne et externe de l'objet dans un premier référentiel à trois dimensions,

(2) recevoir un deuxième modèle en trois dimensions de l'appareil à fabriquer définissant au moins un ensemble de zones fonctionnelles caractéristiques de l'appareil, et, optionnellement un contour de l'appareil, le deuxième modèle comprenant des données :

- de coordonnées dans un deuxième référentiel à trois dimensions de points de bord faisant partie du bord d'une zone fonctionnelle et de points de sommet représentant des sommets d'une zone fonctionnelle,
- d'une valeur d'un paramètre de déformation, représentatif de la déformation de la zone fonctionnelle, associée à chaque point de sommet,
- optionnellement, de coordonnées dans le deuxième référentiel de points ou de lignes de contour de l'appareil,

(3) modifier le deuxième modèle en appliquant aux points du modèle une matrice de transformation qui exprime les coordonnées de ces points dans le premier référentiel,

(4) calculer pour chaque zone fonctionnelle du deuxième modèle :

- une courbe de bord, notamment continue, passant par les points de bord,
- une courbe de sommets, notamment continue, passant par les points de sommet,

(5) transférer sur le premier modèle les courbes de bord, les courbes de sommets et les valeurs de paramètre de déformation associées à chaque point de sommet du deuxième modèle, et optionnellement les points ou de lignes de contour de l'appareil,

(6) déformer la surface externe du premier modèle en fonction des courbes de sommet pour conformer la surface externe du premier modèle à la forme du deuxième modèle dans chaque zone fonctionnelle et obtenir un premier modèle corrigé,

(7) optionnellement, afficher une représentation graphique du premier modèle corrigé,

(8) enregistrer le premier modèle corrigé dans une mémoire d'ordinateur en tant que modèle final.

2

Le procédé selon l'invention permet ainsi d'obtenir un modèle en trois dimensions de l'appareil intégré au modèle du corps vivant ou d'une partie d'un corps vivant. L'utilisation d'un modèle du corps vivant incluant la structure interne pour adapter un modèle d'appareil permet d'améliorer l'adaptation du modèle final à la forme du corps du patient, et au final, la précision de l'appareil. Notamment, cette précision peut être encore améliorée lorsque le premier modèle est lui-même obtenu au moyen d'un procédé d'imagerie radiographique utilisant des données d'image de l'objet, notamment issues de deux images radiographiques de la structure interne et d'une image en trois dimensions de la structure externe de l'objet.

Le procédé selon l'invention permet ainsi d'améliorer la personnalisation de la représentation numérique de l'appareil et du corps vivant, cette représentation numérique pouvant ensuite être utilisée directement pour fabriquer l'appareil, ou pour fabriquer un moule à partir duquel l'appareil sera fabriqué.

Au cours de l'étape (3), la matrice de transformation est ainsi appliquée aux points du deuxième modèle choisis parmi les points de bord, les points de sommets et optionnellement les points de contour. Cette matrice peut éventuellement être appliquée aux lignes de contour du deuxième modèle. La matrice de transformation est calculée de manière à faire correspondre des repères caractéristiques de la structure interne de l'objet à appareiller définissant le deuxième référentiel du deuxième modèle avec les mêmes repères caractéristiques présents dans le premier modèle.

Le procédé peut comprendre, notamment après l'étape (6) et de préférence avant l'étape (8) :

- recevoir un coefficient de correction saisi par un utilisateur à appliquer à chaque valeur du paramètre de déformation associée à un point de sommet,
- corriger les valeurs du paramètre de déformation du premier modèle pour chacun des points de sommet, et
- enregistrer les valeurs corrigées dans la mémoire d'ordinateur.

Ceci permet à un utilisateur de contrôler la raideur de l'appareil à réaliser en fonction de considérations cliniques, assurant ainsi une meilleure adaptation du modèle et par conséquent de l'appareil à réaliser. L'enregistrement peut être réalisé au cours de l'étape (8) ou avant.

Le procédé peut comprendre, notamment après l'étape (7) ou (8), une étape de transformation du modèle final en un ensemble d'instructions utilisables pour contrôler une machine de fabrication assistée par ordinateur, pour fabriquer l'appareil ou un moule de l'appareil.

Au cours de l'étape (1) de réception d'un premier modèle, on reçoit un premier modèle de la structure interne et externe d'un objet formant une partie au moins du corps vivant, cette partie étant destinée à recevoir un appareil, par exemple une orthèse ou prothèse.

L'objet mentionné ci-dessus peut comprendre notamment le rachis, le bassin, ou encore le genou d'un patient, ou plus généralement être constitué par tout ou partie du corps du patient. Dans ces différents cas, les structures internes à observer peuvent être constituées notamment par les os du patient.

Un tel modèle comprend des données représentatives de coordonnées de points de la structure interne et de coordonnées de points de la structure externe (à savoir de points de la surface de l'objet), ces coordonnées étant exprimées dans un unique référentiel à trois dimensions.

Ce premier modèle peut être généré par toute méthode connue de modélisation de la structure interne et externe d'un objet. Des modèles appropriés peuvent par exemple être générés en utilisant une ou plusieurs techniques choisies parmi l'imagerie par résonance magnétique (IRM), l'échographie, la tomographie par ordinateur (« Computer Tomography » ou CT, voir par exemple US8634626B2), les techniques de radiographie par rayons X conventionnelles, la fluoroscopie, les techniques d'ultrasons.

Dans un mode de réalisation préféré, l'étape (1) de réception d'un premier modèle de la structure interne et externe de l'objet peut comprendre la génération de ce premier modèle par un procédé d'imagerie radiographique à partir de données d'image de l'objet, notamment issues de deux images radiographiques de la structure interne et d'une image en trois dimensions de la structure externe de l'objet.

Dans un mode de réalisation, cet objet étant notamment situé à l'intérieur d'un champ d'observation, la génération du premier modèle par le procédé d'imagerie radiographique, peut comprendre :

A. recevoir des premières données d'image générées dans un premier référentiel de référence à trois dimensions, représentatives de deux images radiographiques en deux dimensions de la structure interne de l'objet capturées selon deux directions de prise de vue non parallèles,
B. recevoir des deuxièmes données d'image générées dans un deuxième référentiel de référence, représentatives d'une image en trois dimensions d'une enveloppe externe de l'objet,
C. lorsque les premier et deuxième référentiels de référence sont différents, transformer les données d'image reçues dans un seul et même référentiel de référence,
D. estimer à partir des deuxièmes données d'image les coordonnées dans le référentiel de référence de premiers repères caractéristiques de la structure interne, et, optionnellement, la valeur d'au moins un paramètre caractéristique de la structure interne,

E. calculer, dans le référentiel de référence, la forme à trois dimensions d'un modèle représentant ladite structure interne à partir d'un modèle générique connu a priori de ladite structure interne, ce modèle générique comportant des points correspondants aux premiers repères, le modèle calculé étant obtenu par déformation du modèle générique de façon que ledit modèle calculé suive une forme la plus proche possible d'une isométrie du modèle générique tout en maintenant en coïncidence les points du modèle générique déformé avec les premiers repères, et optionnellement en appliquant au modèle calculé le ou les paramètres caractéristiques de la structure interne,

F. choisir au moins un deuxième repère caractéristique de la structure interne à localiser sur chacune des deux images radiographiques, et optionnellement, au moins un deuxième repère à localiser sur une seule image radiographique, et pour chaque deuxième repère :

(i) identifier un point appartenant au modèle calculé à l'étape E) correspondant au deuxième repère,
(ii) calculer les coordonnées d'une projection de ce point sur le(s) image(s) radiographique(s),
iii) déterminer à partir des premières données d'image les coordonnées du deuxième repère sur l'image radiographique en le recherchant dans une zone de recherche située autour des coordonnées de la projection,

G. calculer les coordonnées des deuxièmes repères dans le référentiel de référence à partir de leurs coordonnées sur au moins une des images radiographiques déterminées à l'étape F),

H. corriger le modèle calculé à l'étape E) en faisant coïncider des points du modèle calculé correspondants aux deuxièmes repères avec les coordonnées de ceux-ci calculés à l'étape G), I. reconstruire un modèle de la structure interne et externe de l'objet avec les données du modèle corrigé à l'étape H) et les données de l'image en trois dimensions de l'enveloppe externe de l'objet exprimées dans le référentiel de référence.

Le ou les repères mentionnés ci-dessus sont des repères anatomiques qui peuvent être des points, des segments, des droites, des arcs, des contours, des arêtes ou autres, ou plus généralement être constitué par tout point ou élément anatomique caractéristique du squelette du patient. Eventuellement, les premiers et deuxièmes repères peuvent être les mêmes repères.

Le ou les paramètres caractéristiques de la structure interne peuvent être des paramètres anatomiques de la structure interne, tel que par exemple des dimensions de repères anatomiques. A titre d'exemple, le tour de taille ou la hauteur séparant le tour de taille au niveau sous axillaire sont des dimensions morphologiques (mesurables sur l'enveloppe externe) permettant d'estimer une dimension anatomique de la structure interne (largeur de l'os iliaque, hauteur des vertèbres).

Ce procédé d'imagerie radiographique permet une intervention réduite, voire nulle, d'un opérateur pour localiser les points anatomiques (deuxièmes repères) sur une radiographie à deux dimensions, facilitant ainsi cette localisation et la rendant plus fiable. En effet, la localisation des deuxièmes repères sur les images radiographiques utilise une image numérisée en 3D de l'objet, exploitée pour corriger un modèle générique existant. La projection de ce modèle corrigé permet de déterminer une position probable des deuxièmes repères sur une radiographie en deux dimensions. Un traitement de chaque image radiographique autour de chaque position probable permet alors de localiser les deuxièmes repères de manière fiable. Ainsi, ce traitement d'image nécessite moins de ressources car il est effectué dans une zone restreinte de l'image radiographique.

On notera que l'étape D est réalisée avant l'étape E, l'étape B est réalisée avant l'étape D et que l'étape A peut être réalisée à tout moment avant l'étape E. L'étape C, si elle s'avère nécessaire, est mise en oeuvre avant utilisation des données des étapes A ou B dans d'autres étapes.

Les premières et deuxièmes données d'image sont par exemple des données représentatives des coordonnées des points d'une image en 2D ou en 3D. Il peut s'agir d'un signal électrique (signal d'image).

Les deuxièmes données d'image reçues à l'étape B peuvent être générées par un système d'imagerie comprenant au moins un capteur optique. Ces deuxièmes données d'image peuvent avantageusement être générées au moyen d'un ou plusieurs capteurs optiques, notamment non irradiants ou ionisants, par exemple un ou plusieurs capteurs optiques d'image, convertissant un signal lumineux en un signal électrique. Le signal lumineux utilisé peut être visible ou non. A titre d'exemple, un système d'imagerie apte à mesurer une profondeur optique est utilisable, par exemple du type décrit dans le document WO 2007/043036.

Dans un mode de réalisation, au cours de l'étape D, la position géométrique estimée de la pluralité de premiers repères peut être déterminée en procédant tout d'abord à la détermination D(i) des coordonnées de repères externes positionnés sur l'enveloppe externe dans un référentiel à trois dimensions, puis par l'estimation D(ii) des coordonnées des premiers repères dans le même référentiel à partir des repères externes.

L'étape D(i) peut être obtenue par calcul au moyen d'un modèle mathématique, ou encore par traitement des deuxièmes données d'image, ces repères externes étant marqués sur l'enveloppe externe. On comprendra que ce marquage est réalisé avant la génération des deuxièmes données d'image reçues à l'étape B.

Le marquage, manuel, utilisé en cas de traitement des données d'image peut être un marquage passif. Il peut consister à positionner des repères externes dessinés ou collés sur la peau du patient, présentant par exemple une forme et/une couleur particulière ou présentant une surface réfléchissante pouvant réfléchir un flash de lumière.

Les repères externes dessinés ou collés peuvent être repérés de manière manuelle, par exemple désignés sur l'image numérisée 3D par un opérateur, ou de manière automatique par exemple par des logiciels de traitement d'image permettant de différencier des couleurs, des intensités lumineuses,.... Une intervention humaine est nécessaire dans ce cas, mais reste limitée.

Le marquage peut également être un marquage actif, tel que le positionnement d'émetteurs sur la peau du patient, de tels émetteurs pouvant éventuellement émettre un signal caractéristique de leur position apte à être détecté par le système d'imagerie permettant de numériser l'enveloppe externe. Ce signal, par exemple un signal lumineux, dans le domaine visible ou non, peut être propre à chaque marqueur et/ou être émis ponctuellement à des intervalles de temps connus ou pendant une durée connue. L'intervention humaine est alors limitée au positionnement des marqueurs sur le patient.

L'étape D(ii) peut notamment être mise en oeuvre par calcul au moyen d'un modèle mathématique. On comprend qu'aucune intervention humaine n'est alors nécessaire lorsque l'étape D(i) utilise aussi un modèle mathématique, améliorant la reproductibilité de la localisation. A titre d'exemple, on peut utiliser un modèle permettant de localiser des repères internes (appartenant à la structure interne) à partir de l'enveloppe externe.

Les premières données d'image reçues à l'étape A peuvent être générées par balayage en déplaçant au moins une source radioactive dans une direction de translation non parallèle à une direction de prise de vue.

De manière générale, les deuxièmes repères sont de préférence choisis parmi des repères à localiser sur chacune des deux images radiographiques (aussi appelés stéréo correspondants), et éventuellement parmi des repères à localiser sur une seule image radiographique (aussi appelés non stéréo correspondants).

L'utilisation au cours de l'étape E de deuxièmes repères stéréo correspondants, à savoir visibles sur les deux images radiographiées, permet d'améliorer la qualité du modèle corrigé. La qualité du modèle corrigé peut encore être améliorée en utilisant d'autres deuxièmes repères non stéréo correspondants. Le nombre de deuxièmes repères utilisables pour corriger le modèle pourra être choisi en fonction de la nature de la structure interne à imager. A titre d'exemple, pour une vertèbre, l'utilisation d'une dizaine de repères peut suffire. En général, on utilisera de 10 à 100 repères de contrôle.

Avantageusement, dans un mode de réalisation, les premières données d'image reçues à l'étape A sont générées simultanément, par balayage, en déplaçant en synchronisme, dans une même direction de translation non parallèle aux directions de prise de vues, deux sources radioactives émettant deux faisceaux de rayons ionisants respectivement dans les deux directions de prise de vue. Ceci peut permettre de générer des données d'images radiographiques dans un même référentiel à trois dimensions, par exemple après une calibration appropriée des sources radioactives.

Dans un mode de réalisation, les premières données d'image et les deuxièmes données d'image sont générées simultanément. Les premières et deuxièmes données images peuvent alors être générées dans un même référentiel à trois dimensions, par exemple après une calibration appropriée des dispositifs d'enregistrement des images. Ceci permet d'éviter de procéder à un recalage des différentes images dans le même référentiel à trois dimensions et de simplifier la mise en oeuvre du procédé selon l'invention. Ce référentiel peut alors servir de référentiel de référence pour le procédé d'imagerie radiographique. Dans ce mode de réalisation, l'étape C n'est pas nécessaire.

Dans un autre mode de réalisation, les premières données d'image et les deuxièmes données d'image peuvent être générées dans des référentiels à trois dimensions différents. Autrement dit, chaque image ou chaque type d'image est enregistrée dans un référentiel à trois dimensions qui lui est propre. C'est par exemple le cas lorsque les images sont générées à des moments distincts. Dans ce cas, le procédé comprend une étape C de transformation des données d'image reçues vers le référentiel de référence, qui peut être mise en oeuvre à l'étape A, à l'étape B ou avant l'utilisation des données issues de l'une de ces étapes.

Cette étape C de transformation peut par exemple être réalisée au moyen d'une matrice de transformation qui permet de passer d'un référentiel à un autre. Cette matrice de transformation peut être déterminée de sorte que des éléments communs aux premières données d'image et aux deuxièmes données d'image coïncident dans le référentiel de référence choisi. Ces éléments communs peuvent faire partie de l'image tel que, par exemple, le contour des images ou être des éléments de marquage radio-opaques de dimensions connus positionnés sur l'objet à imager avant la génération des données d'image.

Dans un mode de réalisation, l'étape (2) de réception du procédé selon l'invention peut comprendre :

comparer la structure interne du premier modèle avec des structures internes connues préalablement répertoriées,
identifier la structure interne connue la plus proche de la structure interne du premier modèle,
choisir un modèle d'appareil adapté à la structure interne connue identifiée.

Notamment, on peut envisager de construire une base de données associant à chaque structure interne répertoriée un modèle d'appareil afin d'automatiser entièrement le choix du deuxième modèle.

Une telle base pourrait être enrichie régulièrement en y enregistrant la structure interne de chaque patient associé au modèle final adapté à ce patient et obtenu par le procédé selon l'invention.

Dans un mode de réalisation, l'étape (5) de transfert du procédé selon l'invention peut comprendre :

(i) projeter la courbe de bord et la courbe de sommets de chaque zone fonctionnelle du deuxième modèle sur la surface externe du premier modèle et calculer les coordonnées de la courbe de bord et de la courbe de sommets projetées sur la surface externe dans le premier modèle,

(ii) corriger les coordonnées de chaque point de sommet de la courbe de sommets projetée auquel est associée une valeur de paramètre de déformation en fonction de cette valeur,

(iii) optionnellement projeter les points ou de lignes de contour du deuxième modèle sur la surface externe du premier modèle et calculer les coordonnées des points ou de lignes de contour projetés.

Différentes méthodes peuvent être utilisées pour la mise en oeuvre de l'étape (6). Dans un mode de réalisation, l'étape (6) de déformation peut comprendre :

(i) identifier les points de la surface externe du premier modèle situés à l'intérieur de chaque courbe de bord projetée sur la surface externe,

(ii) déformer le premier modèle au niveau de chaque zone fonctionnelle, en déplaçant, le long d'une direction normale à la surface externe, les points identifiés en (i) d'une distance de déplacement fonction de sa position à l'intérieur de la zone fonctionnelle.

Cette distance de déplacement peut être définie par des règles prédéterminées qui seront appliquées pour chaque zone fonctionnelle.

L'invention a également pour objet un support lisible par ordinateur, contenant des instructions codées pour être interprétables par un circuit processeur et exécutées par celui-ci selon le procédé selon l'invention.

L'invention a encore pour objet un dispositif pour produire une représentation numérique pour fabriquer un appareil adapté à un objet formant une partie au moins d'un corps vivant, notamment pour la mise en oeuvre du procédé selon l'invention, caractérisé en ce qu'il comprend:

- des moyens de réception d'un premier modèle en trois dimensions de la structure interne et externe de l'objet dans un premier référentiel à trois dimensions,
- des moyens de réception d'un deuxième modèle en trois dimensions de l'appareil à fabriquer définissant au moins un ensemble de zones fonctionnelles caractéristiques de l'appareil et optionnellement un contour de l'appareil, le deuxième modèle comprenant des données représentatives:

  - de coordonnées dans un deuxième référentiel à trois dimensions de points de bord faisant partie du bord d'une zone fonctionnelle et de points de sommet représentant des sommets d'une zone fonctionnelle,
  - d'une valeur d'un paramètre de déformation, représentatif de la déformation de la zone fonctionnelle, associée à chaque point de sommet,
  - optionnellement, des coordonnées dans le deuxième référentiel de points ou de lignes de contour de l'appareil,

- des moyens de modification du deuxième modèle en appliquant aux points du modèle une matrice de transformation qui exprime les coordonnées de ces points dans le premier référentiel,
- des moyens de calcul, pour chaque zone fonctionnelle du deuxième modèle :

  - d'une courbe de bord passant par les points de bord,
  - d'une courbe de sommets passant par les points de sommet,

- des moyens de transfert sur le premier modèle des courbes de bord, des courbes de sommets et des valeurs du paramètre de déformation associées à chaque point de sommet du deuxième modèle, et optionnellement des points ou de lignes de contour de l'appareil,
- des moyens de déformation de la surface externe du premier modèle utilisant les courbes de sommet pour conformer la surface externe du premier modèle à la forme du deuxième modèle dans chaque zone fonctionnelle et obtenir un premier modèle corrigé,
- des moyens d'affichage d'une représentation graphique du premier modèle corrigé,
- des moyens d'enregistrement du premier modèle corrigé dans une mémoire d'ordinateur en tant que modèle final.

Notamment, la matrice de transformation appliquée au deuxième modèle par les moyens de modification peut être telle que définie en référence au procédé.

Dans un mode de réalisation, le dispositif peut comprendre :

des moyens de réception d'un coefficient de correction saisi par un utilisateur à appliquer à chaque valeur du paramètre de déformation associée à un point de sommet,
des moyens de correction des valeurs du paramètre de déformation du premier modèle pour chacun des points de sommet, et
des moyens d'enregistrement des valeurs corrigées dans la mémoire d'ordinateur.

Dans un mode de réalisation, le dispositif peut comprendre des moyens de transformation du modèle final en un ensemble d'instructions utilisables pour contrôler une machine de fabrication assistée par ordinateur, pour fabriquer l'appareil ou un moule de l'appareil.

Dans un mode de réalisation, le dispositif peut comprendre des moyens de génération du premier modèle par un procédé d'imagerie radiographique à partir de données d'image de l'objet, notamment issues de deux images radiographiques de la structure interne et d'une image en trois dimensions de la structure externe de l'objet.

Ces moyens de génération peuvent comprendre :

- des moyens de réception de données d'image pour recevoir des premières données d'image générées dans un référentiel à trois dimensions, représentatives d'au moins une image radiographique en deux dimensions de la structure interne de l'objet, et des deuxièmes données d'image générées dans un référentiel à trois dimensions représentatives d'une image en trois dimensions d'une enveloppe externe de l'objet,
- des moyens de traitement raccordés aux moyens de réception agencés pour effectuer au moins les étapes C) à I) du procédé,
- des moyens de transmission.

Dans un mode de réalisation, les moyens de réception du deuxième modèle peuvent comprendre :

des moyens de comparaison de la structure interne du premier modèle avec des structures internes connues préalablement répertoriées,
des moyens d'identification de la structure interne connue la plus proche de la structure interne du premier modèle,
des moyens de sélection d'un modèle d'appareil adapté à la structure interne connue identifiée.

Dans un mode de réalisation, les moyens de transfert peuvent comprendre :

- des moyens de projection de la courbe de bord et de la courbe de sommets de chaque zone fonctionnelle du deuxième modèle sur la surface externe du premier modèle et des moyens de calcul des coordonnées des courbes de bord et de sommets projetées sur la surface externe dans le premier modèle,
- des moyens de correction des coordonnées de chaque point de sommet de la courbe de sommets projetée auquel est associée une valeur de paramètre de déformation en fonction de cette valeur,
- optionnellement, des moyens de projection des points ou de lignes de contour du deuxième modèle sur la surface externe du premier modèle et des moyens de calcul des coordonnées des points ou de lignes de contour projetés.

Dans un mode de réalisation, les moyens de déformation peuvent comprendre :

- des moyens d'identification des points de la surface externe du premier modèle situés à l'intérieur de chaque courbe de bord projetée sur la surface externe,
- des moyens de déformation du premier modèle au niveau de chaque zone fonctionnelle, configurés pour déplacer, le long d'une direction normale à la surface externe, les points identifiés par les moyens d'identification, d'une distance de déplacement fonction de la position de chacun de ces points à l'intérieur de la zone fonctionnelle.

Un autre objet de l'invention est un programme d'ordinateur comprenant des portions de code de programme pour l'exécution des étapes du procédé pour produire une représentation numérique pour fabriquer un appareil adapté à un objet selon l'invention, lorsque ledit programme est exécuté par un dispositif pour produire une représentation numérique pour fabriquer un appareil adapté à un objet selon l'invention.

Description des Figures:

L'invention est maintenant décrite en référence aux dessins annexés, non limitatifs, dans lesquels :

- la figure 1 est une vue schématique d'un système de fabrication d'un appareil pour un corps vivant selon un mode de réalisation;
- la figure 2 est une représentation schématique d'une image numérisée en 3D de l'enveloppe externe du patient,
- la figure 3 est une représentation similaire à la figure 2 sur laquelle sont représentés des repères externes,
- la figure 4 est une représentation schématique d'un modèle générique en 3D d'un squelette,
- la figure 5 est une représentation schématique d'un modèle en 3D calculé du squelette du patient et de ses projections sur les images radiographiques,
- les figures 6a et 6b sont des représentations schématiques en coupe transversale montrant les déformations du modèle 3D,
- la figure 7 représente les projections des points sur une radiographie et une zone de recherche,
- la figure 8 représente un modèle en 3D reconstruit du squelette du patient,
- la figure 9 représente schématiquement des zones fonctionnelles d'un deuxième modèle,
- la figure 10 représente schématiquement le dispositif 100 représenté figure 1,
- les figures 11a et 11b représentent schématiquement les points de repères de structure interne définissant le référentiel du modèle M2 (fig.11a) et du modèle M1 (fig.11b),
- la figure 12 représente schématiquement la surface externe du modèle M1 et les courbes de bord et de sommets d'une zone fonctionnelle,
- la figure 13 représente schématiquement la surface externe du modèle M1 et les courbes de bord et de sommets d'une zone fonctionnelle projetée sur la surface externe,
- la figure 14 représente un modèle final obtenu avec le procédé selon l'invention.

Description Détaillée:

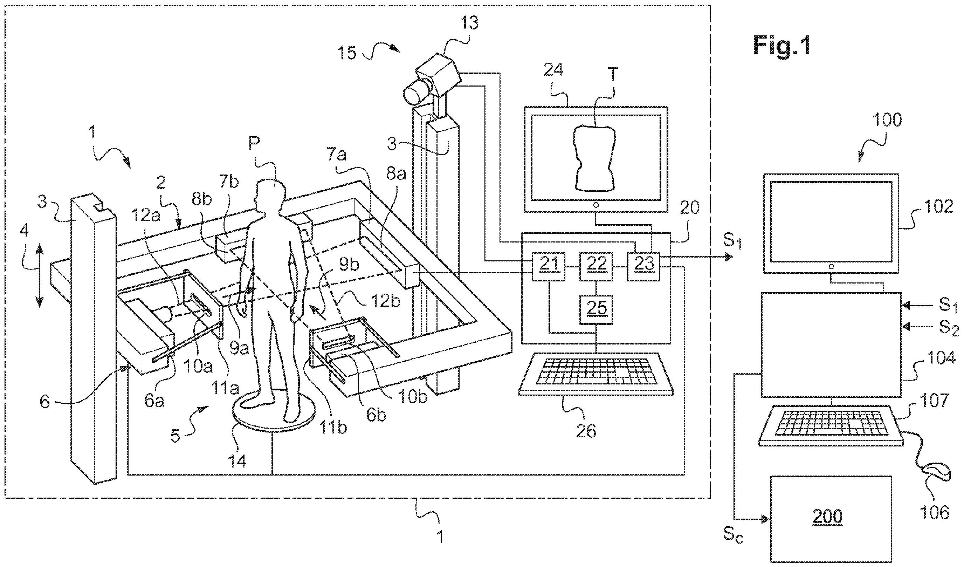

La figure 1 représente un système de fabrication d'un appareil pour un corps vivant comprenant un dispositif 100 configuré pour produire une représentation numérique pour fabriquer un appareil adapté à un objet formant une partie au moins d'un corps vivant et une machine de fabrication 200 assistée par ordinateur (FAO), reliée au dispositif 100.

Le dispositif 100 reçoit un premier signal S1 codé avec des données représentatives de la structure interne et externe d'une partie d'un corps vivant pour lequel un appareil doit être fabriqué. Ces données forment un premier modèle au sens de l'invention et sont des points de la structure interne et de la structure externe dont les coordonnées sont exprimées dans un unique référentiel à trois dimensions.

Dans l'exemple, la partie de corps vivant est un torse T d'un patient P, mais dans d'autres modes de réalisation, la partie du corps peut être n'importe quelle partie d'un corps vivant.

Le premier signal S1 peut être reçu d'un dispositif d'imagerie radiographique 1 représenté figure 1, lequel met en oeuvre un procédé d'imagerie radiographique à partir de données d'image du torse T du patient P. Ce signal S1 peut être reçu directement ou être enregistré sur un support pouvant être lu par le dispositif 100.

Le dispositif 100 reçoit également un deuxième signal S2 codé avec des données représentatives de l'appareil à fabriquer définissant au moins un ensemble de zones fonctionnelles caractéristiques de l'appareil et optionnellement un contour de l'appareil.

Le dispositif 100 comporte des moyens d'exécution d'un programme d'ordinateur adapté pour mettre en oeuvre le procédé décrit dans la présente invention et corriger le premier modèle reçu afin d'obtenir un modèle corrigé, adapté au patient considéré, de l'appareil à produire intégré au premier modèle.

Ce modèle corrigé de l'appareil à produire comprend des zones fonctionnelles telles que des zones de compression dans les zones du corps qui tolèrent la pression et / ou des zones de relief dans certaines zones du corps sensibles à la pression, fournissant ainsi un appareil confortablement ajusté.

Le dispositif 100 comprend également un dispositif d'affichage 102 pour afficher une représentation du torse T du patient P, un circuit de traitement 104 pour manipuler le premier modèle corrigé et/ou final et /ou la représentation affichée du torse. Dans ce mode de réalisation, l'appareil 100 comprend également un dispositif de pointage 106 (souris) ayant un ou plusieurs boutons d'actionneur pour recevoir une entrée d'utilisateur et un clavier 107 faisant partie d'une interface d'entrée. Le dispositif d'affichage 102 peut en outre est un dispositif tactile permettant également de recevoir une entrée utilisateur.

La machine de fabrication 200 peut être une machine comprenant un outil pour usiner un moule à partir d'un matériau tel que de la mousse de polyuréthane ou du bois. Dans ce cas, le moule peut représenter une partie du torse du patient plus grande que la partie à appareiller. A cet effet, on peut par exemple utiliser une machine du type fraiseuse de 3 à 5 axes, par exemple fabriquées par la société Orten®. Le moule usiné peut ensuite être utilisé pour former l'appareil, tel qu'une orthèse, en moulant un matériau thermoplastique ou autre sur la reproduction usinée. Une fois suffisamment durci sur le moule, l'appareil peut être retiré et, si nécessaire, rogné ou traité afin d'obtenir l'appareil final.

La machine de fabrication 200 peut aussi comprendre un système d'impression en 3D pour fabriquer directement l'appareil. A cet effet, on peut par exemple utiliser une machine telle que la HP Jet Fusion 3D 4200 de la marque HP®

Le dispositif d'imagerie radiographique 1 représenté figure 1 comporte une armature mobile 2 déplaçable verticalement de façon motorisée sur des guides verticaux 3, dans une direction de translation 4.

Cette armature entoure un champ d'observation 5 dans lequel peut prendre place un patient P, debout tel que représenté ou dans une position assise si nécessaire.

L'armature mobile 2 porte une première source radioactive 6a et une deuxième source radioactive 6b. Chaque source radioactive 6a, 6b est associée à un détecteur 7a, 7b, respectivement qui est disposé face à la source 6a, 6b, au-delà du champ d'observation 5. Chaque détecteur 7a, 7b comporte au moins une ligne horizontale 8a, 8b de cellules de détection. Les sources 6a, 6b et les détecteurs 7a, 7b font partie d'un premier système d'imagerie radiographique 6.

Les sources radioactives 6a, 6b sont adaptées pour émettre des rayons ionisants, notamment des rayons X, dans les directions de prise de vue 9a, 9b respectivement, ces rayonnements ionisants étant aptes à être détectés par les détecteurs 7a, 7b. La direction de prise de vue 9a est antéropostérieure par rapport au patient P alors que la direction de prise de vue 9b est latérale par rapport au patient P.

De manière classique, les rayonnements ionisants émis par les sources 6a, 6b traversent chacun une fente horizontale 10a, 10b ménagée dans un réticule 11a, 11b tel qu'une plaque métallique, pour générer un faisceau horizontal 12a, 12b de rayonnements ionisants dans le champ d'observation 5.

Bien entendu, les sources radioactives et les détecteurs pourraient être en nombre supérieur à 2, et les directions de prise de vue de ces différentes sources radioactives pourraient, le cas échéant, ne pas être perpendiculaires entre elles, ni même horizontales.

Le dispositif comprend en outre au moins un capteur optique 13 pour réaliser la numérisation externe du patient P. Tout type de capteur optique d'image est utilisable, tels que les capteurs CCD (Couple Charge Device) et CMOS (Complementary Metal Oxyde Semiconductor) ou encore les capteurs aptes à mesurer une profondeur optique. A noter cependant qu'il est préférable d'utiliser un capteur optique présentant une précision et résolution de maillage élevée.

Dans l'exemple, ce capteur optique 13 est monté sur l'un des guides verticaux 3. Le patient est en en outre debout sur un plateau 14 qui peut être mis en rotation au moyen d'un moteur. Une image en 3D du patient peut ainsi être prise en faisant tourner le plateau 14 sur 360°. Cette image 3D pourrait être prise en positionnant plusieurs capteurs optiques 13 autour du patient P au lieu de le faire tourner. 5 ou 6 capteurs optiques répartis autour du patient pourraient par exemple être utilisés pour numériser l'enveloppe externe du patient P, notamment simultanément à la prise des radiographies. Dans une autre variante, l'image 3D pourrait être prise en déplaçant un unique capteur optique 13 autour du patient, soit manuellement, soit automatiquement au moyen d'un bras motorisé, d'un rail, ou autre.

Le ou les capteurs optiques 13 font partie d'un deuxième système d'imagerie 15.

Les deux détecteurs 7a, 7b et le capteur optique 13 sont reliés à un dispositif de traitement d'image radiographique 20, par exemple un ordinateur, notamment un micro-ordinateur, ou autre système électronique de commande tel que, par exemple un ou plusieurs processeurs de type microprocesseur, microcontrôleur ou autre.

L'ordinateur 20 comporte des moyens d'exécution d'un programme d'ordinateur adapté pour mettre en oeuvre le procédé d'imagerie radiographique décrit dans la présente invention. Ce programme d'ordinateur comprend ainsi des portions de code de programme pour l'exécution de chacune des étapes du procédé d'imagerie radiographique. Chaque portion de code peut être écrite dans tout langage de programmation approprié, tel que C, et / ou C ++, par exemple. L'ordinateur 20 comprend des moyens de réception 21 de données d'image pour recevoir des données d'image représentatives d'une ou plusieurs images radiographiques et d'une image en trois dimensions d'une enveloppe externe de l'objet. Il comprend aussi des moyens de traitement 22 raccordés aux moyens de réception 21 agencés pour exécuter les étapes C à I précédemment décrites du procédé d'imagerie radiographique. Enfin, il comprend des moyens de transmission 23, notamment vers un dispositif d'affichage 24, ici un écran, raccordés aux moyens de traitement 22. Les moyens de réception 21 sont par exemple un port d'entrée, une broche d'entrée, ou autre. Les moyens de traitement 22 peuvent par exemple comprendre un coeur de processeur ou CPU (de l'anglais « Central Processing Unit ») configuré pour exécuter des codes de programme pour la mise en oeuvre de chacune des étapes du procédé d'imagerie radiographique. Les moyens de transmission 23 peuvent par exemple comprendre un port de sortie, une broche de sortie ou autre. Les moyens de réception 21, de traitement 22 et de transmission 23 constituent des moyens de génération d'un modèle d'un objet par un procédé d'imagerie radiographique.

L'ordinateur 20 peut également comporter des moyens de mémorisation 25 reliés aux moyens de traitement 22, qui peuvent être une mémoire vive ou une mémoire RAM (de l'anglais « Random Access Memory »), une EEPROM (de l'anglais « (Electrically-Erasable Programmable Read-Only Memory »), ou autre. Ces moyens de mémorisation peuvent notamment mémoriser les différents modèles et données, et éventuellement le programme d'ordinateur.

L'ordinateur 20 est en outre ici équipé : d'une interface d'entrée comprenant au moins un clavier 26 et généralement une souris (non représentée), et d'une interface de sortie comprenant au moins l'écran 24 et généralement une imprimante (non représentée).

L'ordinateur 20 peut également être relié aux moyens d'entraînement motorisés (non représentés) contenus dans les guides 3 et dans le plateau tournant 14, aux sources 6a, 6b et au capteur optique 13, de façon à commander d'une part le déplacement vertical de l'armature 2 et l'émission des rayonnements ionisants et d'autre part la rotation du plateau tournant 14 et le fonctionnement du capteur optique 13.

Les détecteurs 7a, 7b peuvent par exemple être des détecteurs gazeux sensibles aux basses doses de rayonnements, par exemple du type décrit dans les documents FR-A-2 749 402 ou FR-A-2 754 068. Bien entendu, d'autres types de détecteurs pourraient éventuellement être utilisés dans le cadre de la présente invention. La détection peut être réalisée par un détecteur purement linéaire (une ligne d'image à la fois), ou par un détecteur matriciel de n'importe quel rapport de forme.

<u>Modèle de la structure interne et externe</u>

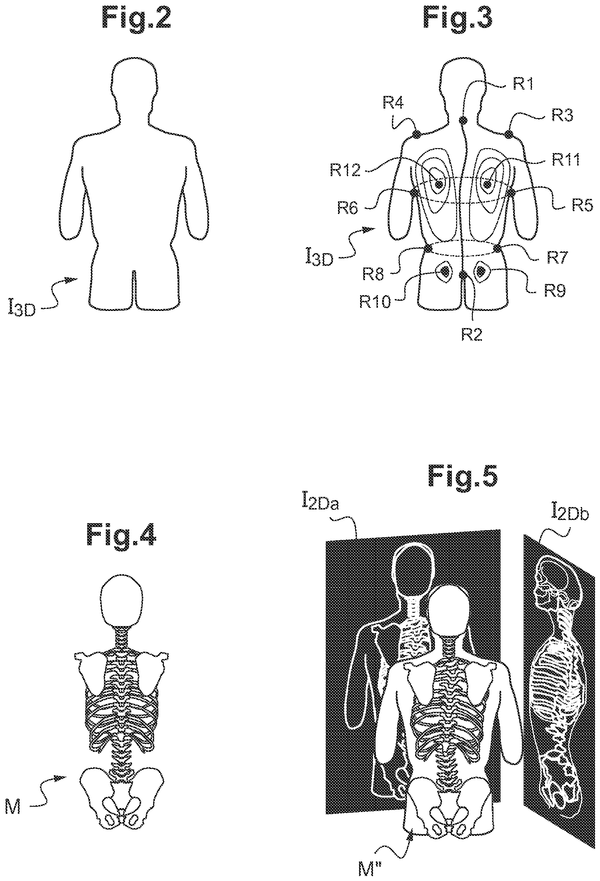

Le fonctionnement du dispositif d'imagerie radiographique est maintenant détaillé en référence aux figures 2 à 8.

Au moyen de l'ordinateur 20, on fait prendre deux images radiographiques numériques I2Da, I2Db du patient P, par exemple en faisant balayer le champ d'observation 5 par les faisceaux 12a, 12b de rayonnements ionisants sur une hauteur correspondant à la hauteur de la zone du patient à observer, par exemple le rachis et le bassin, voire l'ensemble du squelette. A cet effet, l'armature 2 est de préférence déplaçable sur une hauteur suffisante, par exemple de 70 cm ou plus, voire de 1 mètre ou plus. Suite à une calibration appropriée des sources 6a, 6b et des détecteurs 7a, 7b, le système d'imagerie radiographique 6 génère des premières données d'image des deux radiographies dans un même référentiel à trois dimensions. Ces premières données d'image sont transmises à l'ordinateur 20 (étape A).

Avant ou après la prise des images radiographiques numériques, toujours au moyen de l'ordinateur 20, on prend une image numérique en trois dimensions I3D (fig. 2) de l'enveloppe externe du patient P en faisant tourner, notamment sur 360°, le plateau 14 supportant le patient P. Le deuxième système d'imagerie 15 génère alors des deuxièmes données d'image dans un deuxième référentiel à trois dimensions différent du précédent, les prises de vues ne pouvant être simultanées. Ces deuxièmes données d'image sont transmises à l'ordinateur 20 (étape B). Il est alors nécessaire de transformer les premières ou les deuxièmes données d'image pour les exprimer dans un même référentiel de référence, qui peut être l'un des référentiels dans lequel sont générées les premières ou deuxièmes données d'image ou un autre référentiel (étape C). Cette transformation peut être réalisée (par les moyens de traitement 22) au moyen d'une matrice de transformation tel que précédemment décrit.

Pour une prise de cette image numérique en 3D simultanée aux radiographies, au lieu d'utiliser un plateau tournant, on pourrait utiliser plusieurs capteurs optiques 13 disposés autour du patient P. Une calibration appropriées des sources 6a, 6b et du capteur optique 13 permettrait alors de générer les premières et deuxièmes données d'image dans un même référentiel à trois dimensions. L'étape C de transformation n'est alors pas nécessaire.

Les images numériques I2Da, I2Db, I3D de la partie examinée du patient sont transmises aux moyens de traitement 22 (étapes A, B). On peut éventuellement les enregistrer dans la mémoire de l'ordinateur 20 et les visualiser sur l'écran 24 de l'ordinateur. Dans l'exemple, les images radiographiques numériques I2Da, I2Db sont des images antéropostérieures et latérales (fig. 5).

On estime ensuite (étape D) une position géométrique dans le référentiel de référence en 3D d'un ou plusieurs points d'intérêt (premiers repères) appartenant à la structure interne. Ces premiers repères sont caractéristiques de la structure interne.

Cette estimation passe de préférence par l'estimation de la position géométrique de repères externes, autrement dit de repères faisant partie de l'enveloppe externe. La localisation de repères externes sur l'enveloppe externe de l'objet présente l'avantage de permettre une estimation sans radiation de la structure interne de cet objet.

L'estimation de la position géométrique des repères externes est de préférence automatique, par exemple en utilisant des méthodes connues, telles que celles décrites par Michonski et al. (Automatic récognition of surface landmarks of anatomical structures of back and posture. J Biomed Opt. 2012 May;17(5):056015).

On peut aussi employer des courbures de Gauss pour identifier des repères externes qui pourront ensuite être utilisés pour estimer la position des premiers repères internes.

Tel que représenté sur la figure 3, on peut identifier préférentiellement les repères externes suivants :
R1 : vertebra prominens de C7, R2 : sommet du pli inter-fessier, R3 et R4 : épaules gauche et droite (points immédiatement à la verticale des plis sous-axillaire), R5 et R6 : plis sous-axillaires gauche et droit, R7, R8 : points gauche et droit de la taille, R9, R10 : épines iliaques postéro-supérieures gauche et droite, R11, R12 angles inférieurs de la scapula gauche et droit.

Les paramètres anatomiques tels que les dimensions des vertèbres et des structures osseuses peuvent être estimées par des équations de régressions liées à des mesures anthropométriques externes, tel que décrit par exemple par Bertrand et al., Estimation of external and internal human body dimensions from few external measurements, Journal of Musculoskeletal Research, Vol. 12, No. 4 (2009) 191-204). Une telle estimation des longueurs caractéristiques de repères anatomiques de la structure interne permet de calculer la position possible de ce repère interne (appelé ici premier repère).

Plusieurs études ont également proposé des relations externes-internes pour estimer les centres des corps vertébraux à partir de la surface externe (The prédiction of lumbar spine geometry: method development and validation.

Campbell-Kyureghyan N, Jorgensen M, Burr D, Marras W. Clin Biomech (Bristol, Avon). 2005 Jun;20(5):455-64).

Différentes lois de transformation non-rigides peuvent aussi être envisagées pour estimer la position des repères de la structure interne (Seo et al. An automatic modeling of human bodies from sizing parameters. In: SI3D '03: Proceedings of the 2003 symposium on Interactive 3D graphics, New York, NY, USA, ACM Press (2003) 19-26).

Le procédé est ici présenté en faisant référence à la colonne vertébrale, mais un procédé similaire pourrait également être utilisé pour une structure interne simple dont on aurait une connaissance a priori, tel qu'un os simple, tel une seule vertèbre, une structure ligamentaire, ou autre, ou un ensemble de structures anatomiques tel qu'un membre inférieur ou supérieur, ou autres. On utilisera alors d'autres repères anatomiques adaptés aux structures à observer/imager. En outre, en fonction de la structure interne à observer/imager, la numérisation de l'enveloppe externe peut être réalisée sur le corps complet du patient ou sur une partie limitée du corps (uniquement le dos du tronc par exemple).

Dès lors que les coordonnées (dans le référentiel de référence) des premiers repères sont estimées et que les valeurs des paramètres anatomiques ont éventuellement été estimées (étape D), on peut calculer (étape E) la forme à trois dimensions d'un modèle représentant la structure interne à partir d'un modèle générique de celle-ci.

A cet effet, on dispose de modèles génériques des structures internes représentés sur les images radiographiques, en particulier les vertèbres, mais éventuellement aussi d'autres structures anatomiques internes, tels les ligaments ou autres. Ces modèles peuvent être enregistrés dans l'ordinateur 20.

Un modèle générique, par exemple établi à partir d'une base de données, peut être défini comme un maillage de quelques centaines à quelques centaines de milliers de points d'une structure.

De tels modèles génériques sont par exemple établis à partir de bases de données contenant des données relatives à des repères particuliers de la structure. Ces données peuvent comprendre des positions de points caractéristiques de la structure, des longueurs caractéristiques de la structure, ou encore des segments, droites ou arcs caractéristiques de la structure, et/ou des contours et arêtes de la structure. Pour une vertèbre, la base contient par exemple la position d'une vingtaine de points caractéristiques de la vertèbre, des longueurs caractéristiques de la vertèbre.

La base de données peut également contenir des données relatives à l'emplacement relatif de la structure interne dans le squelette du sujet dont elle est issue. Dans le cas d'une vertèbre, il s'agit par exemple de l'orientation angulaire de la vertèbre et la courbure de la colonne au niveau de la vertèbre.

Il est possible d'établir des classements des objets dans différentes catégories afin de distinguer des données caractéristiques d'individus sains ou atteints d'une pathologie, et/ou caractéristiques du poids, de la taille, de l'âge ou de tout autre type de paramètre d'un individu.

Un modèle générique peut comporter par exemple des données statistiques (moyennes, variances, ...) pour chaque paramètre de la base de données, ou bien des équations mathématiques permettant de déterminer pour un objet donné la localisation de points caractéristiques à partir de la valeur de paramètres estimateurs de cet objet.

Dans un mode de réalisation, la forme à trois dimensions d'un modèle représentant la structure interne est calculée à partir d'un modèle générique de celle-ci par exemple en paramétrant ce dernier au moyen des premiers repères et éventuellement des paramètres anatomiques qui ont été estimées, de préférence automatiquement, à partir de l'image numérique I3D de l'enveloppe externe.

La figure 4 représente schématiquement le modèle générique M de la structure osseuse du sujet, la figure 5 montrant le modèle M" calculé obtenu par paramétrage du modèle M. La scoliose du sujet observé est ainsi visible sur le modèle calculé M".

Ce paramétrage du modèle générique M peut être réalisé en modifiant les dimensions du modèle générique conformément aux paramètres anatomiques.

On peut par exemple utiliser la méthode décrite par Hwang et al. ("Rapid Development of Diverse Human Body Models for Crash Simulations through Mesh Morphing," SAE Technical Paper 2016-01-1491, 2016).

Pour cela, on fait correspondre les coordonnées d'un ou plusieurs points du modèle générique M correspondants à des premiers repères avec les coordonnées de ces premiers repères estimés à partir des données de l'image I3D. Ce positionnement peut être réalisé par rapport aux positions des vertèbres associées à chaque paire de côtes. Puis, on déforme le modèle générique géométriquement en conservant les longueurs pour correspondre aux contraintes données par l'enveloppe externe. Un modèle mécanique peut également être utilisé à cette étape (Closkey, R. F., Schultz, A. B. and Luchies, C. W. (1992) A model for studies of the deformable rib cage. Journal of Biomechanics, 25, 529-539).

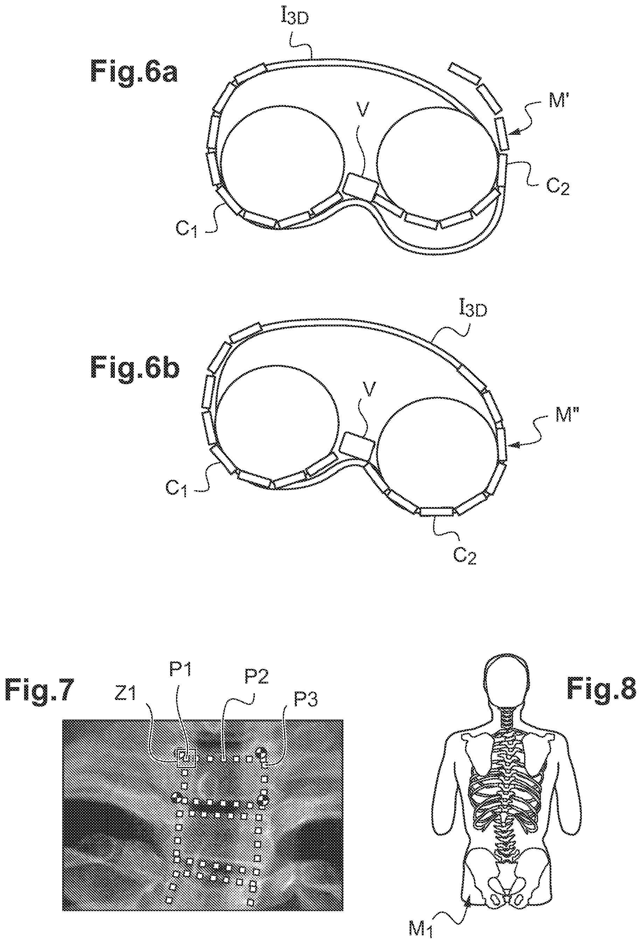

Par exemple, lorsque la structure à imager est le gril costal, le modèle générique M est d'abord mis aux dimensions du patient au moyen des premiers repères et des paramètres anatomiques pour obtenir un modèle M', puis, il est positionné à l'intérieur de l'image numérisée I3D de l'enveloppe externe par rapport aux positions des vertèbres associées à chaque paire de côtes, tel que représenté sur la figure 6a. Le modèle M' est alors dans le même référentiel de référence que l'image I3D de l'enveloppe externe. Sur cette figure 6a, la lettre « V » désigne une vertèbre, à laquelle sont reliées les côtes C1 et C2. Le trait plein correspond à l'image de l'enveloppe externe I3D, alors que les traits pointillés correspondent au modèle M'. Les côtes C1, C2 du modèle M' sont ensuite déformées géométriquement en conservant leurs longueurs pour correspondre aux contraintes données par la forme externe du tronc, en particulier les gibbosités thoraciques, tel que représenté sur la figure 6b. On obtient ainsi un modèle 3D calculé M" de la structure interne à observer/imager (étape E). Lors de cette étape, les techniques d'animation de rigging (déformation du squelette par cinématique directe ou inverse) et de skinning (association de chaque os du squelette à une portion de la peau) peuvent être utilisées (Avatar reshaping and automatic rigging using a deformable model. Feng A., Casas D., Shapiro A..Proceeding MIG '15 Proceedings of the 8th ACM SIGGRAPH Conférence on Motion in Games p 57-64).

On procède ensuite (étape F (i)) à la projection du modèle 3D calculé M" sur chacune des images radiographiées I2Da, I2Db (fig.5). Cette projection permet un repérage de repères anatomiques (deuxièmes repères) dans les radiographies 2D sans nécessiter de traitement d'image, ce qui permet d'accélérer ce repérage et de le rendre plus fiable. Le choix des deuxièmes repères peut être automatique ou manuel avec une désignation d'un opérateur. Ces deuxièmes repères peuvent être les mêmes que les premiers repères ou non.

La projection utilisée est par exemple une projection linéaire. Cette projection peut être effectuée en utilisant la technique DLT (acronyme anglais de « Direct Linear Transformation »- transformation linéaire directe). Il est également possible de modifier les équations de la technique DLT en procédant à une simplification. Par projection du modèle M", on obtient ainsi les coordonnées en 2D estimées des deuxièmes repères dans chaque image radiographiée I2Da, I2Db (étape F(ii)). Cette estimation initiale est ensuite affinée (étape F(iii)), en définissant une zone de recherche située autour de la projection du deuxième repère du modèle calculé dans l'image radiographiée. La figure 7 représente les projections d'une pluralité de ces points Pi sur une radiographie, ou i est un nombre entier représentant un nombre de points. Pour des raisons de clarté, seuls quelques points P1, P2, P3 sont représentés. La zone Z1 correspond à la zone de recherche du repère de projection P1.

Cette étape commence par exemple par une segmentation des ROI (Région Of Interest- régions d'intérêt).

On peut alors appliquer des filtres permettant de repérer les zones de fortes densités négatives et positives (filtre orienté). Un filtre de Canny appliqué à ces ROI permet ensuite de déterminer des contours qui peuvent être utilisés par la technique de transformée généralisé de Hough (utilisant un modèle de vertèbre).

En variante, au lieu d'utiliser les filtres orientés et de Canny, l'amélioration des estimations initiales peut se faire automatiquement par une méthode de contour actif comme le flux de vecteur gradient (GVF) (Moura et al.. Fast 3D reconstruction of the spine from biplanar radiographs using a déformable articulated model. Med Eng Phys. 2011 Oct;33(8):924-33).

L'étape F(iii) permet d'obtenir les coordonnées des deuxièmes repères sur chacune des images radiographiques pour les repères stéréo-correspondants ou sur l'une des images radiographique pour les repères non stéréo-correspondants. A partir de ces coordonnées plus précises, on peut recalculer les coordonnées des deuxièmes repères dans le référentiel de référence (étape G) et corriger le modèle calculé à l'étape E en faisant coïncider des points du modèle calculé correspondants aux deuxièmes repères avec les coordonnées plus précises de ceux-ci calculés à l'étape G (étape H). Ceci revient à optimiser les projections 2D du modèle 3D M".

Lorsque les projections 2D du modèle 3D M" ont été optimisées en exploitant les données radiographiques, le modèle 3D M" peut être reconstruit (étape I). A cet effet, on corrige par exemple le modèle M" par Transformation Linéaire Directe (DLT) en utilisant les mêmes couples de points (avec leurs coordonnées actualisées) que lors de la projection (deuxièmes repères). Un modèle reconstruit M1 est alors obtenu (fig. 8).

Cette reconstruction est réalisée en utilisant des deuxièmes repères qui sont stéréo-correspondants. La géométrie épipolaire, utilisant des repères non stéréo correspondants peut être aussi utilisée pour obtenir une reconstruction plus précise du modèle M1 (méthode de type NSCP (Non Stéréo Correspondent Point)). Par exemple, après la reconstruction des points stéréo-correspondants (étape G), le modèle M1 est initialisé. Les points non-stéréo-correspondants du modèle M1 seront projetés uniquement dans une des deux vues radiographiques (I2Da ou ID2b) dans laquelle on sait que la recherche sera possible. Le modèle M1 est réactualisé par l'intégration des points non-stéréo-correspondants.

Le modèle M1 obtenu est un modèle en trois dimensions de la structure interne et externe du torse du patient P dans un premier référentiel à trois dimensions qui correspond au référentiel de référence mentionné dans le procédé d'imagerie radiographique précédemment décrit.

Ce modèle M1 comprend ainsi des données représentatives :

- de coordonnées de points de la structure interne,
- de coordonnées de points de la structure externe (à savoir de points de la surface).

Ces coordonnées sont exprimées dans un unique référentiel à trois dimensions.

Par structure externe, on entend ici la forme de l'enveloppe de l'objet, à savoir la forme de sa surface externe.

Ces données du modèle M1 sont codées dans le premier signal S1 reçu par le dispositif 100 au cours de l'étape (1) du procédé selon l'invention.

Modèle de l'appareil à fabriquer

Ce deuxième modèle M2 est un modèle en trois dimensions de l'appareil à fabriquer définissant au moins un ensemble de zones fonctionnelles caractéristiques de l'appareil et optionnellement un contour de l'appareil.

Selon la nature de l'appareil (orthèse ou prothèse) ces zones fonctionnelles peuvent être des zones d'appui (ou zones de compression ou de dépression), des zones de décharge (ou zones de relief), des zones de découpe (par exemple pour un corset), des ouvertures, des ajourages, des zones d'accueil de composants tels que des sangles de fermeture ou des zones de rivetages.

Le modèle M2 comprend des données représentatives :

- de coordonnées dans un deuxième référentiel à trois dimensions de points de bord faisant partie du bord d'une zone fonctionnelle et de points de sommet représentant des sommets d'une zone fonctionnelle,
- d'une valeur d'un paramètre de déformation, représentatif de la déformation de la zone fonctionnelle, associée à chaque point de sommet.

Lorsque l'on souhaite utiliser le procédé selon l'invention pour générer directement l'appareil, il est alors nécessaire que le deuxième modèle comprenne des données relatives au contour de l'appareil, telles que les coordonnées dans le deuxième référentiel de points ou de lignes de contour.

Lorsque le procédé selon l'invention est utilisé pour réaliser un moule sur lequel sera thermoformé l'appareil, la présence de données de contour d'appareil dans le deuxième modèle n'est pas nécessaire.

De manière générale, un modèle M2 d'appareil est conçu pour une structure interne particulière et une enveloppe externe particulière, tel qu'expliqué plus bas.

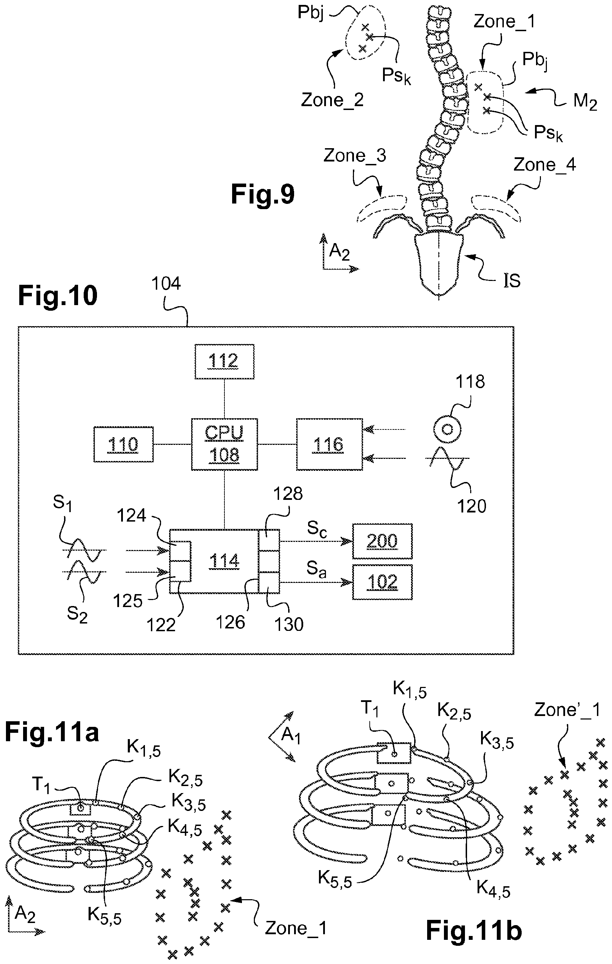

La figure 9 représente schématiquement 4 zones fonctionnelles Zone_i (i entier non nul de 1 à 4) d'un modèle M2 comprenant chacune des points de bord $Pb_j$, des points de sommet $Ps_k$. A chaque point sommet $Ps_k$ est associée une valeur de paramètre de déformation $V_k$ (j et k : entiers positifs non nuls représentant le nombre de points). La structure interne IS représentée ne fait pas partie du modèle M2 et est représentée uniquement afin de montrer le positionnement des zones fonctionnelles par rapport à la structure interne.

Le paramètre de déformation correspond par exemple à une distance et sa valeur peut être exprimée en mm.

Ce paramètre correspond à la distance séparant un point sommet de la surface du patient modèle pour lequel le modèle M2 d'appareil a été réalisé. Cette distance est mesurée suivant une direction normale à la surface de la forme externe du patient modèle.

Les données du modèle M2 sont codées dans le deuxième signal reçu par le dispositif 100.

Circuit de traitement du dispositif

Tel que représenté figure 10, le dispositif 100 est un ordinateur, par exemple un micro-ordinateur ou autre système électronique de commande tel que, par exemple un ou plusieurs processeurs de type microprocesseur, microcontrôleur ou autre. Dans l'exemple, le circuit de traitement 104 du dispositif 100 comprend un coeur de processeur CPU 108, une mémoire d'ordinateur 110, un disque dur ou un disque externe ou téléchargeable 112, une interface d'entrée/sortie 114, et un lecteur multimédia 116, reliés les uns aux autres.

La mémoire d'ordinateur 110 peut comprendre une ou plusieurs mémoires choisies parmi une mémoire vive ou RAM (de l'anglais « Random Access Memory »), une ROM (de l'anglais « Read-Only Memory »), une EEPROM (de l'anglais « Electrically-Erasable Programmable Read-Only Memory »), ou autre. La mémoire d'ordinateur 110 peut être utilisée pour stocker les différents modèles et données et le programme d'ordinateur.

Notamment, le CPU 108 peut être configuré pour réaliser chacune des étapes du procédé selon l'invention et des modes de réalisation précédemment décrits. En exécutant le programme pour mettre en oeuvre le procédé pour produire une représentation numérique selon l'invention, le CPU 108 fonctionne comme un dispositif comprenant des moyens de modification, des moyens de calcul, des moyens de transfert, des moyens de déformation, des moyens d'enregistrement.

Le programme d'ordinateur comprend ainsi des portions de code de programme pour l'exécution de chacune des étapes du procédé pour produire une représentation numérique pour fabriquer un appareil adapté à un objet selon l'invention. Ces portions de code peuvent être stockées dans la mémoire d'ordinateur 110 ou téléchargées, de préférence stockées dans la mémoire d'ordinateur.

Chaque portion de code est configurée pour diriger le CPU 108 afin de fournir une fonction particulière décrite dans une étape du procédé. Autrement dit, dans la suite de la description, chaque étape décrite doit être comprise comme correspondant à une portion de code spécifique configurer pour diriger le CPU 108 afin qu'il exécute l'étape de procédé. Chaque portion de code peut être écrite dans tout langage de programmation approprié, tel que C, et / ou C ++, par exemple.

Le lecteur de média 116 facilite le chargement de codes de programme dans la mémoire d'ordinateur à partir d'un support lisible par ordinateur, tel qu'un disque CD ROM 118, ou un signal 120 lisible par ordinateur, tel que reçu sur un réseau comme Internet, par exemple. A noter l'ordinateur 20 précédemment décrit peut également être pourvu d'un tel lecteur de média.

L'interface d'entrée/sortie 114 comprend :

une première interface d'entrée 122 ayant:

- une entrée 124 pour recevoir le signal S1 codé avec les données représentatives du modèle M1 de la structure interne et externe du torse T,
- une entrée 125 pour recevoir le signal S2 codé avec les données représentatives du modèle M2 de l'appareil à fabriquer, et

une seconde interface de sortie 126 ayant

- une sortie 128 pour produire un signal de commande Sc codé avec les instructions pour commander la machine 200,
- une sortie 130 pour produire un signal d'affichage Sa pour provoquer l'affichage sur le dispositif d'affichage 102 de la structure interne et externe corrigée du torse T portant l'appareil.

On notera que chaque signal S1, S2 peut arriver via le lecteur multimédia ou via l'interface d'entrée 122, ou par une seule et même entrée.

Les interfaces 122 et 126 peuvent être un bus série universel (USB) ou une interface série RS232 par exemple.

Dans un mode de réalisation non représenté, le CPU 108 peut inclure les moyens de traitement 22 du dispositif d'imagerie radiographique 1 et l'interface entrée sortie peut comprendre les moyens de réception 21 et de transmission 23 du dispositif 1. Autrement dit, un seul ordinateur peut être utilisé pour mettre en oeuvre toutes les étapes du procédé selon l'invention. Le dispositif 100 et l'ordinateur 20 forment alors un seul et même ordinateur.

Fonctionnement

Au cours de la première étape (1), le CPU 108 reçoit le premier modèle M1 défini dans un premier référentiel A1, par exemple généré parles moyens de génération d'un premier modèle du dispositif d'imagerie radiographique 1, sous la forme d'un premier signal codé S1.

Lors de la deuxième étape (2), le CPU 108 reçoit le deuxième modèle M2 sous la forme d'un deuxième signal codé S2. Ce deuxième modèle M2 est défini dans un deuxième référentiel A2 différent du premier référentiel.

En exécutant des codes de programme pour mettre en oeuvre ces étapes (1) et (2), le CPU 108 fonctionne comme des moyens de réception.

On notera que l'étape (2) suit l'étape (1) : l'inverse pourrait toutefois être envisagé, en particulier lorsque le type de modèle M2 est choisi manuellement par un utilisateur.

Ensuite, au cours de l'étape (3), le CPU 108 modifie le modèle M2 en appliquant aux points du modèle une matrice de transformation qui exprime les coordonnées de ces points dans le premier référentiel (référentiel de référence du modèle M1).

Le deuxième référentiel peut être défini par des repères caractéristiques de la structure interne de l'objet à appareiller. Ces repères peuvent être choisis parmi des repères fonctionnels internes et des repères anatomiques.

Un repère fonctionnel interne est un repère qui est variable d'un patient à l'autre et qui peut se définir par rapport à une pathologie (il peut alors s'agir d'un repère anatomique, comme par exemple la vertèbre sommet) ou qui peut se définir par rapport à un mouvement (centre de rotation instantané d'une articulation, genou par exemple, qui n'est pas relié directement à un repère anatomique). Un repère anatomique interne est un repère fixe invariable d'un patient à un autre défini géométriquement par son emplacement anatomique (exemple processus épineux de C7).

La figure 11a représente les repères caractéristiques $T_1$, $K_{1,5}$, $K_{2,5}$, $K_{3,5}$, $K_3$, 5, $K_{4,5}$, $K_{5,5}$ de la structure interne IS(M2) qui permettent de définir le deuxième référentiel d'un modèle M2 d'un corset pour scoliose, et une des zones fonctionnelles Zone_1 du modèle M2. Les repères représentés correspondent respectivement à des repères anatomiques $T_1$, $K_{1,5}$, $K_{2,5}$, $K_{3,5}$, $K_3$, 5, $K_{4,5}$, $K_{5,5}$. Si T1 est la vertèbre Sommets, alors ces repères sont aussi appelés TS, KS,5, KS+1, 5, KS+2 5, KS+3, 5 KS+4, 5 et sont des repères fonctionnels.

Ces différents repères $T_1$, $K_{1,5}$, $K_{2,5}$, $K_{3,5}$, $K_3$, 5, $K_{4,5}$, $K_{5,5}$ existent dans le premier modèle M1, avec des positions relatives différentes de celles observées dans le deuxième modèle M2.

Une matrice de transformation peut ainsi être calculée de manière à faire correspondre ces différents repères, par exemple par la méthode des moindres carrés. De préférence, la transformation appliquée est non rigide, pour permettre une déformation linéaire du deuxième modèle sur les trois axes du référentiel (transformation affine).

La figure 11b représente les mêmes points repères dans le premier modèle M1 et la zone fonctionnelle Zone'_1 obtenue suite à l'application de la matrice.

Cette étape (3) de modification du deuxième modèle permet ainsi de modifier (déformer) le deuxième modèle M2 afin de l'adapter en partie à la forme particulière de l'objet à appareiller, autrement dit au premier modèle M1.

En exécutant des codes de programme pour mettre en oeuvre l'étape (3), le CPU 108 fonctionne comme des moyens de déformation.

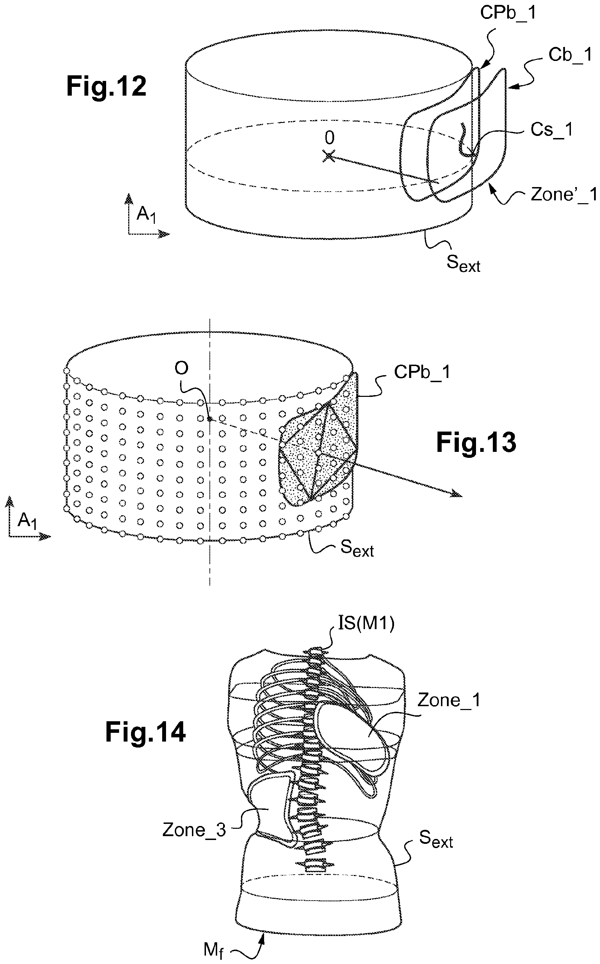

Au cours de l'étape (4) suivante, le CPU 108 calcule pour chaque zone fonctionnelle Zone_i du deuxième modèle M2, une courbe de bord Cb_i passant par les points de bord $Pb_j$ et une courbe de sommets Cs_i passant par les points de sommet $Ps_k$. Ces courbes sont représentées sur la figure 12.

Ces courbes, parfois appelées « splines », sont des courbes calculées au moyen de fonctions définies par morceaux par un polynôme sur chaque intervalle entre des points de bord ou des points de sommet. De préférence, ces courbes sont continues pour une meilleure précision du modèle et un meilleur confort de l'appareil. On utilise alors des polynômes de degré 3.

Ce calcul des courbes de bord et de sommets est de préférence réalisé après l'étape (3) de modification, sur les zones Zone'_i, afin de limiter la quantité de données à traiter lors de l'étape (3). Les courbes sont alors calculées (paramétrées) dans le premier référentiel.

Il serait toutefois envisageable de calculer ces courbes dans le deuxième référentiel, avant l'étape (3), et d'appliquer la matrice de transformation à ces courbes.

L'étape (4) de calcul des courbes de bord et de sommet de chaque zone fonctionnelle permet ainsi d'enrichir le deuxième modèle M2, autrement dit d'augmenter le nombre de points dont les coordonnées sont contenues dans le deuxième modèle, ce qui permet d'améliorer la précision du modèle.

En exécutant des codes de programme pour mettre en oeuvre l'étape (4), le CPU 108 fonctionne comme des moyens de calcul.

Le deuxième modèle M2 provient d'un modèle particulier, conçu pour une structure interne particulière et une enveloppe externe particulière. L'étape (3) permet d'adapter la forme du deuxième modèle à la structure interne, mais ne tient pas compte de la structure externe : ainsi les points du deuxième modèle ne sont pas forcément sur l'enveloppe externe de l'objet considéré.

Lors de l'étape (5) suivante, pour chaque zone Zone'_i, le CPU 108 transfère sur le premier modèle M1 les courbes de bord Cb_i, les courbes de sommets Cs_i et les valeurs de paramètre de déformation $V_k$ associées à chaque point de sommet du deuxième modèle, et optionnellement les points ou lignes de contour de l'appareil. En exécutant des codes de programme pour mettre en oeuvre l'étape (5), le CPU 108 fonctionne comme des moyens de transfert.

Par transfert, on entend le déplacement des courbes de bord et de sommets sur la surface externe du premier modèle, optionnellement le déplacement des points ou lignes de contour de l'appareil sur la surface externe de l'appareil, mais aussi le transfert des valeurs de paramètre de déformation associées à chaque point de sommet du deuxième modèle.

Ce transfert concerne ainsi les courbes de bords, les courbes de sommet et les valeurs de paramètre de déformation associées à chaque point de sommet du deuxième modèle, et optionnellement les points ou lignes de contour de l'appareil.

Le transfert de l'étape (5) permet ainsi de positionner les courbes de bord et les courbes de sommets en tenant compte des valeurs des paramètres de déformation pour ces dernières, et optionnellement les points ou lignes de contour du deuxième modèle de l'appareil, sur l'enveloppe externe du premier modèle. Il reste cependant à adapter la forme de l'enveloppe externe du premier modèle aux courbes de sommets transférées : c'est l'objet de l'étape (6) de déformation.

Le CPU 108 déforme ensuite au cours de l'étape (6) la surface externe du premier modèle M1 en utilisant les courbes de sommets pour conformer la surface externe du premier modèle à la forme du deuxième modèle M1 dans chaque zone fonctionnelle et obtenir un premier modèle corrigé M1corr. En exécutant des codes de programme pour mettre en oeuvre l'étape (6), le CPU 108 fonctionne comme des moyens de déformation de la surface externe du modèle M1.

Le procédé peut comprendre une étape (7) au cours de laquelle le CPU 108 affiche une représentation graphique du premier modèle corrigé M1corr par exemple sur le dispositif d'affichage 102. En exécutant des codes de programme pour mettre en oeuvre l'étape (7), le CPU 108 fonctionne comme des moyens d'affichage.

Enfin, le CPU 108 enregistre ensuite à l'étape (8) le premier modèle corrigé M1corr dans la mémoire d'ordinateur (110) en tant que modèle final Mf. En exécutant des codes de programme pour mettre en oeuvre l'étape (7), le CPU 108 fonctionne comme des moyens d'enregistrement.

Des exemples de réalisation de certaines étapes sont maintenant détaillés.

Au cours de la deuxième étape (2) de réception du deuxième modèle, le CPU 108 reçoit un deuxième modèle comprenant des données exprimées dans le deuxième référentiel A2 à trois dimensions, différent du premier référentiel A1.

Le deuxième modèle M2 reçu peut être choisi par un utilisateur parmi des modèles connus, en fonction d'éléments cliniques et/ou en fonction de la structure interne du patient.

Ces modèles connus peuvent être des modèles numérisés d'appareils réellement utilisés pour des patients particuliers. Autrement dit, le modèle M2 peut être le modèle numérique d'un appareil existant réalisé pour un patient présentant une pathologie particulière : un tel modèle est alors établi en fonction de la structure interne et de l'enveloppe externe propres au patient.

Le modèle M2 peut également être un modèle générique d'appareil destiné à une pathologie particulière. Dans ce cas, il est également établi en fonction d'une structure interne et d'une enveloppe externe particulières.

Pour certains types d'appareils, on peut envisager une sélection semi-automatique ou automatique du deuxième modèle parmi un ensemble de modèles d'appareil existants, notamment lorsqu'il est possible de réaliser des bases de données associant à chaque pathologie, un modèle numérisé générique d'un type d'appareil utilisé pour la pathologie considérée ou un modèle numérisé de l'appareil utilisé pour un patient particulier atteint de cette pathologie.

Le choix du modèle reçu à l'étape (2) peut ainsi être automatisé, par exemple en utilisant une base de données répertoriant les pathologies, des données caractéristiques de ces pathologies, notamment des données d'image, et les appareils existants. Ces données d'image sont par exemple des données représentatives de radiographies obtenues pour une scoliose particulière. Elles peuvent être associées à un modèle d'appareil à utiliser pour la pathologie considérée.

Par exemple, dans le cas d'une scoliose, une base de données peut contenir différents types de scoliose et associer à chaque type de scoliose des données d'images radiographiques de la structure interne caractéristique de la scoliose (par exemple une ou plusieurs radiographies de la colonne vertébrale) et un modèle d'appareil à utiliser, tel que représenté dans le tableau 1.

Tableau 1 : exemple de base de données

| Type de scoliose | A | B | C |
|---|---|---|---|
| Données d'images radiographiques | Données $X_A$ | Données $X_B$ | Données $X_C$ |
| Modèle d'appareil | $M2_A$ | $M2_B$ | $M2_C$ |

Le CPU 108 peut alors comparer les données de la structure interne du premier modèle M1 avec les données $X_A$, $X_B$, $X_C$ des structures internes de la base de données, puis, identifier les données de structure interne connue les plus proches des données de la structure interne du premier modèle M1, par exemple $X_B$, et enfin choisir le modèle d'appareil $M2_B$ adapté à la structure interne connue identifiée.

En exécutant des codes de programme pour mettre en oeuvre ces étapes, le CPU 108 fonctionne comme des moyens de comparaison de structure interne, des moyens d'identification d'une structure interne et des moyens de sélection d'un modèle d'appareil.

Un exemple de réalisation de l'étape (5) de transfert est maintenant détaillé. Cette étape (5) permet de prendre en compte, au moins en partie, la surface externe de l'objet en transférant le deuxième modèle sur le premier modèle.

Ce transfert peut comprendre une projection des courbes de bord et des courbes de sommet, et optionnellement des points ou lignes de contour, sur la surface externe du premier modèle, par exemple par une technique dite de « lancer de rayon ». Cette technique consiste à découper l'objet de destination, ici le premier modèle, en sections horizontales (l'objet considéré étant dans une position habituelle, à savoir une position debout droite pour un patient), et à projeter chaque point de l'objet de départ (ici le deuxième modèle) vers l'objet de destination (ici la surface externe du premier modèle) suivant une direction passant par le centre de la section horizontale dans laquelle est contenue le point de l'objet de départ.

La figure 12 représente très schématiquement la structure externe Sext du modèle M1 ainsi qu'une zone fonctionnelle Zone'_1 appartenant au modèle M2 (transformée par la matrice au cours de l'étape (3)) et définie par sa courbe de bord (Cb_1), sa courbe de sommets (Cs_1) et les valeurs de paramètre de déformation.

Le CPU 108 exécute le transfert de la manière suivante. La courbe de bord Cb_1 de la zone fonctionnelle Zone'_1 du modèle M2 est projetée (point par point) sur la surface externe Sext du modèle M1 par la technique du lancer de rayon, dans un plan horizontal, le centre de la section obtenue étant désigné par la lettre O. Une courbe de bord projetée CPb_1 est ainsi obtenue et ses coordonnées sur la surface externe dans le modèle M1 sont calculées (étape (5)(i). Autrement dit, la courbe de bord obtenue CPb_1 appartient à la structure externe du modèle M1.

Le CPU 108 procède alors de la même manière pour la courbe de sommets Cs_1 et calcule les coordonnées de cette courbe de sommets projetée sur la surface externe. Afin de redonner à la courbe de sommets sa forme avant projection, le CPU 108 corrige les coordonnées de la courbe de sommets projetée en lui appliquant les valeurs du paramètre de déformation. Pour cela, chaque point de la courbe de sommets auquel une valeur de paramètre de déformation est associée est déplacé suivant une direction normale à la surface externe de la valeur du paramètre de déformation, et ses coordonnées sont ainsi corrigées (étape (5)(ii).

Enfin, lorsque la machine 200 est une imprimante 3D, le modèle M2 doit contenir des points ou lignes de contour nécessaires à la réalisation de l'appareil. Dans ce cas, le CPU 208 transfère également ces points ou lignes de contour (étape (5)(iii)) suivant la même méthode que les courbes de bord, par exemple par projection sur la surface externe, notamment par la technique de lancer de rayon.

En exécutant des codes de programme pour mettre en oeuvre ces étapes 5(i)(ii)(iii), le CPU 108 fonctionne comme des moyens de projection et de calcul d'une courbe de bord, voire de points ou lignes de contour, et des moyens de correction des coordonnées des points de sommet.

Ces étapes 5(i)(ii)(iii) permettent de positionner les courbes de bord et optionnellement les points ou lignes de contour de l'appareil, sur l'enveloppe externe du premier modèle. Il reste cependant à adapter la forme de l'enveloppe externe du premier modèle aux courbes de sommets transférées : c'est l'objet de l'étape (6) de déformation dont un mode de réalisation est détaillé ci-après.

Lors de l'étape (6), le CPU 108 commence par identifier les points de la surface externe du modèle M1 situés à l'intérieur de chaque courbe de bord CPb_i projetée sur la surface externe (étape (6) (i)).

Comme toute surface modélisée, la surface externe du modèle M1 est définie par des points répartis selon un maillage dont la taille des mailles peut être variable selon la manière dont la surface est modélisée, tel que représenté fig.13. Le présent mode de réalisation présente l'avantage d'être indépendant du type de maillage utilisé. En exécutant des codes de programme pour mettre en oeuvre l'étape 6(i), le CPU 108 fonctionne comme des moyens d'identification de points de la surface externe.

L'étape (6)(i) d'identification des points peut ainsi utiliser un algorithme de triangulation d'un polygone, lequel consiste à décomposer le polygone formé par une courbe de bord en un ensemble (fini) de triangles, associé à une technique de lancer de rayon.

A cet effet, la triangulation d'un polygone peut être effectuée en utilisant la méthode décrite par Bernard Chazelle (« Triangulating a simple polygon in linear time », Discrete Comput. Geom., vol. 6, 1991, p. 485-524).

Chaque zone fonctionnelle, définie par une courbe de bord qui forme un polygone, peut ainsi être décomposée en un ensemble de triangles tel que représenté figure 13. On peut alors utiliser la technique de lancer de rayon pour identifier les points de la surface externe appartenant à la zone fonctionnelle définie par la courbe CPb_1 en procédant de la manière suivante : on relie chaque point de la surface externe avec le centre O de la coupe horizontale correspondante. Si la droite obtenue coupe l'un des triangles d'une zone fonctionnelle, alors le point de la surface externe est un point de la zone fonctionnelle et est identifié comme tel (fig.13).

L'identification des points appartenant à la surface externe de chaque zone fonctionnelle étant réalisée, le CPU 108 peut alors procéder à la déformation proprement dite du modèle M1 au niveau de chaque zone fonctionnelle (étape (6)(ii)). Cette déformation consiste à déplacer chaque point identifié le long d'une direction normale à la surface externe, d'une distance de déplacement fonction de la position du point considéré à l'intérieur de la zone fonctionnelle.

A titre d'exemple, les règles suivantes peuvent être appliquées :

- tout point identifié situé à une distance du point sommet le plus proche supérieure ou égale à une distance seuil $d_{seuil}$ ne doit pas être déplacé (distance de déplacement $d_{dis}(0)= 0$),
- tout point identifié situé à une distance nulle du point sommet le plus proche doit être déplacé d'une distance maximale telle que, après déplacement, le point identifié est confondu avec le point sommet, (distance de déplacement $d_{dis}(max)= x$, x étant la distance séparant le point sommet de la surface externe du premier modèle),
- tout point identifié situé à une distance $d_{point}$ du point sommet le plus proche inférieure à la distance seuil est déplacé d'une distance de déplacement $d_{dis}(point)$ proportionnelle à la distance de déplacement maximale :

$$d_{dis}(point)= \frac{d_{point}}{d_{seuil}} \times d_{dis}(max)$$

La distance seuil $d_{seuil}$ peut par exemple être de 9 à 11 cm pour un appareil de type corset.

La distance entre un point de la surface externe et un point de sommet est par exemple définie comme la valeur de la norme d'un vecteur reliant ces deux points.

Le point de sommet le plus proche peut ainsi être trouvé en comparant les distances entre un point de maillage et les différents points de sommet et en retenant le point de sommet pour lequel la distance est la plus courte.

En exécutant des codes de programme pour mettre en oeuvre l'étape 6(ii), le CPU 108 fonctionne comme des moyens de déformation de la surface externe du premier modèle au niveau de chaque zone fonctionnelle

A la fin de l'étape (6), le CPU 108 fournit le premier modèle corrigé, M1corr. Le CPU 108 peut alors recevoir un coefficient de correction saisi par un utilisateur et l'appliquer à chaque valeur de paramètre de déformation associée à un point de sommet. En exécutant des codes de programme pour mettre en oeuvre cette étape, le CPU 108 fonctionne comme des moyens de réception d'un coefficient de correction.

Cette saisie peut résulter d'une saisie d'une valeur de coefficient de correction directement au moyen du clavier ou d'une saisie via le dispositif de pointage 106, ou encore directement via le dispositif d'affichage 102 s'il est tactile, lequel peut par exemple être utilisé pour déplacer un point de sommet de la représentation graphique suivant une normale à la surface externe d'un coefficient donné.

En fonction des données saisies, le CPU 108 corrige toutes les valeurs de paramètre de déformation du premier modèle M1corr. Cette correction peut être simultanée au déplacement du dispositif de pointage 106. Autrement dit, dans ce mode de réalisation, les points de sommet ne peuvent être déplacés indépendamment les uns des autres. En exécutant des codes de programme pour mettre en oeuvre cette étape, le CPU 108 fonctionne comme des moyens de correction de valeurs de paramètre de déformation

Lorsque cette manipulation effectuée par un utilisateur est terminée, le modèle M1corr avec les nouvelles valeurs de paramètre de déformation est enregistré par le CPU 108 dans la mémoire d'ordinateur 110 en tant que modèle final Mf, représenté sur la figure 14.

Lorsqu'aucune saisie par un utilisateur n'est nécessaire, le modèle corrigé M1corr constitue le modèle final enregistré.

Ce modèle final contient :

- les données représentatives de la structure interne IS(M1) propre au patient reçues avec les données de l'étape (1),
- les données représentatives de la structure externe Sext du patient reçues avec les données de l'étape (1) mais modifiées au niveau des zones fonctionnelles de l'appareil,
- les données représentatives de l'appareil à fabriquer, y compris les valeurs de paramètre de déformation.

Le CPU 108 peut alors transformer les données du modèle final en un ensemble d'instructions utilisables pour contrôler la machine de fabrication 200 assistée par ordinateur, pour fabriquer l'appareil ou un moule de l'appareil.

Cet ensemble d'instructions peut être codé en un signal de commande Sc pouvant être transmis à la machine 200 soit directement, soit via un support lisible par ordinateur.

## Revendications

1. Procédé pour produire une représentation numérique pour fabriquer un appareil adapté à un objet formant une partie au moins d'un corps vivant, comprenant :

    (1) recevoir un premier modèle en trois dimensions de la structure interne et externe de l'objet dans un premier référentiel à trois dimensions,
    (2) recevoir un deuxième modèle en trois dimensions de l'appareil à fabriquer définissant au moins un ensemble de zones fonctionnelles caractéristiques de l'appareil et optionnellement un contour de l'appareil, le deuxième modèle comprenant des données représentatives:

        - de coordonnées dans un deuxième référentiel à trois dimensions de points de bord faisant partie du bord d'une zone fonctionnelle et de points de sommet représentant des sommets d'une zone fonctionnelle,
        - d'une valeur d'un paramètre de déformation, représentatif de la déformation de la zone fonctionnelle, associée à chaque point de sommet,
        - optionnellement, des coordonnées dans le deuxième référentiel de points ou de lignes de contour de l'appareil,

    (3) modifier le deuxième modèle en appliquant aux points du modèle une matrice de transformation qui exprime les coordonnées de ces points dans le premier référentiel, la matrice de transformation étant calculée de manière à faire correspondre des repères caractéristiques de la structure interne de l'objet à appareiller définissant le deuxième référentiel du deuxième modèle avec les mêmes repères caractéristiques présents dans le premier modèle,
    (4) calculer pour chaque zone fonctionnelle du deuxième modèle :

        - une courbe de bord passant par les points de bord,
        - une courbe de sommets passant par les points de sommet,

    (5) transférer sur le premier modèle les courbes de bord, les courbes de sommets et les valeurs de paramètre de déformation associées à chaque point de sommet du deuxième modèle, afin de positionner les courbes de bord et les courbes de sommets en tenant compte des valeurs des paramètres de déformation pour ces dernières et optionnellement les points ou lignes de contour de l'appareil, sur l'enveloppe externe du premier modèle,
(6) déformer la surface externe du premier modèle en fonction des courbes de sommets pour conformer la surface externe du premier modèle à la forme du deuxième modèle dans chaque zone fonctionnelle et obtenir un premier modèle corrigé,
(7) optionnellement, afficher une représentation graphique du premier modèle corrigé,
(8) enregistrer le premier modèle corrigé dans une mémoire d'ordinateur en tant que modèle final.

2.  Procédé selon la revendication 1, **caractérisé en ce qu'**il comprend en outre, notamment après l'étape (6) :

    recevoir un coefficient de correction saisi par un utilisateur à appliquer à chaque valeur du paramètre de déformation associée à un point de sommet,
    corriger les valeurs du paramètre de déformation du premier modèle pour chacun des points de sommet, et enregistrer les valeurs corrigées dans la mémoire d'ordinateur.

3.  Procédé selon la revendication 1 ou 2, **caractérisé en ce qu'**il comprend en outre :
    transformer le modèle final en un ensemble d'instructions utilisables pour contrôler une machine de fabrication assistée par ordinateur, pour fabriquer l'appareil ou un moule de l'appareil.

4.  Procédé selon l'une quelconque des revendications 1 à 3, **caractérisé en ce que** l'étape (1) de réception d'un premier modèle de la structure interne et externe de l'objet comprend la génération de ce premier modèle par un procédé d'imagerie radiographique à partir de données d'image de l'objet, notamment issues de deux images radiographiques de la structure interne et d'une image en trois dimensions de la structure externe de l'objet.

5.  Procédé selon la revendication 4, **caractérisé en ce que** la génération du premier modèle par le procédé d'imagerie radiographique, comprend :

    A. recevoir des premières données d'image générées dans un premier référentiel de référence à trois dimensions, représentatives de deux images radiographiques en deux dimensions de la structure interne de l'objet capturées selon deux directions de prise de vue non parallèles,
    B. recevoir des deuxièmes données d'image générées dans un deuxième référentiel de référence, représentatives d'une image en trois dimensions d'une enveloppe externe de l'objet,
    C. lorsque les premier et deuxième référentiels de référence sont différents, transformer les données d'image reçues dans un seul et même référentiel de référence,
    D. estimer à partir des deuxièmes données d'image les coordonnées dans le référentiel de référence de premiers repères caractéristiques de la structure interne, et, optionnellement, la valeur d'au moins un paramètre caractéristique de la structure interne,
    E. calculer, dans le référentiel de référence, la forme à trois dimensions d'un modèle représentant ladite structure interne à partir d'un modèle générique connu a priori de ladite structure interne, ce modèle générique comportant des points correspondants aux premiers repères, le modèle calculé étant obtenu par déformation du modèle générique de façon que ledit modèle calculé suive une forme la plus proche possible d'une isométrie du modèle générique tout en maintenant en coïncidence les points du modèle générique déformé avec les premiers repères, et optionnellement en appliquant au modèle calculé le ou les paramètres caractéristiques de la structure interne,
    F. choisir au moins un deuxième repère caractéristique de la structure interne à localiser sur chacune des deux images radiographiques, et optionnellement, au moins un deuxième repère à localiser sur une seule image radiographique, et pour chaque deuxième repère :

        (i) identifier un point appartenant au modèle calculé à l'étape E) correspondant au deuxième repère,
        (ii) calculer les coordonnées d'une projection de ce point sur le(s) image(s) radiographique(s),
        iii) déterminer à partir des premières données d'image les coordonnées du deuxième repère sur l'image radiographique en le recherchant dans une zone de recherche située autour des coordonnées de la projection,

    G. calculer les coordonnées des deuxièmes repères dans le référentiel de référence à partir de leurs coordonnées sur au moins une des images radiographiques déterminées à l'étape F,
    H. corriger le modèle calculé à l'étape E en faisant coïncider des points du modèle calculé correspondants aux deuxièmes repères avec les coordonnées de ceux-ci calculés à l'étape G,
    I. reconstruire un modèle de la structure interne et externe de l'objet avec les données du modèle corrigé à l'étape H) et les données de l'image en trois dimensions de l'enveloppe externe de l'objet exprimées dans le référentiel de référence.

6. Procédé selon l'une quelconque des revendications 1 à 5, **caractérisé en ce que** l'étape (2) de réception du deuxième modèle comprend :

> comparer la structure interne du premier modèle avec des structures internes connues préalablement répertoriées,
> identifier la structure interne connue la plus proche de la structure interne du premier modèle,
> choisir un modèle d'appareil adapté à la structure interne connue identifiée.

7. Procédé selon l'une quelconque des revendications 1 à 6, **caractérisé en ce qu'**au moins une étape choisie parmi l'étape (5) de transfert et l'étape de déformation (6) est définie de la manière suivante :

> - l'étape (5) de transfert comprend :
>
> > (i) projeter la courbe de bord et la courbe de sommets de chaque zone fonctionnelle du deuxième modèle sur la surface externe du premier modèle et calculer les coordonnées de la courbe de bord et de la courbe de sommets projetées sur la surface externe dans le premier modèle,
> > (ii) corriger les coordonnées de chaque point de sommet de la courbe de sommets projetée auquel est associée une valeur de paramètre de déformation en fonction de cette valeur,
> > (iii) optionnellement projeter les points ou de lignes de contour du deuxième modèle sur la surface externe du premier modèle et calculer les coordonnées des points ou de lignes de contour projetés,
>
> - l'étape de déformation (6) comprend :
>
> > (i) identifier les points de la surface externe du premier modèle situés à l'intérieur de chaque courbe de bord projetée sur la surface externe,
> > (ii) déformer le premier modèle au niveau de chaque zone fonctionnelle, en déplaçant, le long d'une direction normale à la surface externe, les points identifiés en (i) d'une distance de déplacement fonction de la position de chacun de ces points à l'intérieur de la zone fonctionnelle.

8. Support lisible (118) par ordinateur, contenant des instructions codées pour être interprétables par un circuit processeur et exécutées par celui-ci pour exécuter le procédé selon l'une quelconque des revendications 1 à 7.

9. Dispositif (100) pour produire une représentation numérique pour fabriquer un appareil adapté à un objet formant une partie au moins d'un corps vivant, **caractérisé en ce qu'**il comprend:

> - des moyens de réception (108) d'un premier modèle en trois dimensions de la structure interne et externe de l'objet dans un premier référentiel à trois dimensions,
> - des moyens de réception (108) d'un deuxième modèle en trois dimensions de l'appareil à fabriquer définissant au moins un ensemble de zones fonctionnelles caractéristiques de l'appareil et optionnellement un contour de l'appareil, le deuxième modèle comprenant des données représentatives:
>
> > - de coordonnées dans un deuxième référentiel à trois dimensions de points de bord faisant partie du bord d'une zone fonctionnelle et de points de sommet représentant des sommets d'une zone fonctionnelle,
> > - d'une valeur d'un paramètre de déformation, représentatif de la déformation de la zone fonctionnelle, associée à chaque point de sommet,
> > - optionnellement, des coordonnées dans le deuxième référentiel de points ou de lignes de contour de l'appareil,
>
> - des moyens de modification (108) du deuxième modèle en appliquant aux points du modèle une matrice de transformation qui exprime les coordonnées de ces points dans le premier référentiel, la matrice de transformation étant calculée de manière à faire correspondre des repères caractéristiques de la structure interne de l'objet à appareiller définissant le deuxième référentiel du deuxième modèle avec les mêmes repères caractéristiques présents dans le premier modèle,
> - des moyens de calcul (108), pour chaque zone fonctionnelle du deuxième modèle :

- d'une courbe de bord passant par les points de bord,
- d'une courbe de sommets passant par les points de sommet,

- des moyens de transfert (108) sur le premier modèle des courbes de bord, des courbes de sommets et des valeurs du paramètre de déformation associées à chaque point de sommet du deuxième modèle, afin de positionner les courbes de bord et les courbes de sommets en tenant compte des valeurs des paramètres de déformation pour ces dernières et optionnellement des points ou de lignes de contour de l'appareil, sur l'enveloppe externe du premier modèle,
- des moyens de déformation (108) de la surface externe du premier modèle utilisant les courbes de sommet pour conformer la surface externe du premier modèle à la forme du deuxième modèle dans chaque zone fonctionnelle et obtenir un premier modèle corrigé,
- des moyens d'affichage (102) d'une représentation graphique du premier modèle corrigé,
- des moyens d'enregistrement (108) du premier modèle corrigé dans une mémoire d'ordinateur (110) en tant que modèle final.

10. Dispositif (100) selon la revendication 9, **caractérisé en ce qu'**il comprend en outre:

des moyens de réception d'un coefficient de correction saisi par un utilisateur à appliquer à chaque valeur du paramètre de déformation associée à un point de sommet,
des moyens de correction des valeurs du paramètre de déformation du premier modèle pour chacun des points de sommet, et
des moyens d'enregistrement des valeurs corrigées dans la mémoire d'ordinateur.

11. Dispositif (100) selon la revendication 9 ou 10 **caractérisé en ce qu'**il comprend en outre une ou plusieurs des caractéristiques suivantes :

des moyens de transformation du modèle final en un ensemble d'instructions utilisables pour contrôler une machine de fabrication assistée par ordinateur, pour fabriquer l'appareil ou un moule de l'appareil,
des moyens de génération du premier modèle par un procédé d'imagerie radiographique à partir de données d'image de l'objet, notamment issues de deux images radiographiques de la structure interne et d'une image en trois dimensions de la structure externe de l'objet,
optionnellement, ces moyens de génération du premier modèle comprennent :

- des moyens (21) de réception de données d'image pour recevoir des premières données d'image générées dans un référentiel à trois dimensions, représentatives d'au moins une image radiographique en deux dimensions de la structure interne de l'objet, et des deuxièmes données d'image générées dans un référentiel à trois dimensions représentatives d'une image en trois dimensions d'une enveloppe externe de l'objet,
- des moyens (22) de traitement raccordés aux moyens de réception agencés pour effectuer au moins les étapes C à I du procédé selon la revendication 5,
- des moyens de transmission (23).

12. Dispositif (100) selon l'une quelconque des revendications 9 à 11, **caractérisé en ce que** les moyens de réception du deuxième modèle comprennent :

des moyens de comparaison de la structure interne du premier modèle avec des structures internes connues préalablement répertoriées,
des moyens d'identification de la structure interne connue la plus proche de la structure interne du premier modèle,
des moyens de sélection d'un modèle d'appareil adapté à la structure interne connue identifiée.

13. Dispositif (100) selon l'une quelconque des revendications 9 à 12, **caractérisé en ce que** les moyens de transfert comprennent:

- des moyens de projection de la courbe de bord et de la courbe de sommets de chaque zone fonctionnelle du deuxième modèle sur la surface externe du premier modèle et des moyens de calcul des coordonnées de la courbe de bord et de sommets projetées sur la surface externe dans le premier modèle,
- des moyens de correction des coordonnées de chaque point de sommet de la courbe de sommets projetée auquel est associée une valeur de paramètre de déformation en fonction de cette valeur,
- optionnellement, des moyens de projection des points ou de lignes de contour du deuxième modèle sur la surface externe du premier modèle et des moyens de calcul des coordonnées des points ou de lignes de contour projetés.

**14.** Dispositif (100) selon la revendication 13, **caractérisé en ce que** les moyens de déformation comprennent :

- des moyens d'identification des points de la surface externe du premier modèle situés à l'intérieur de chaque courbe de bord projetée sur la surface externe,
- des moyens de déformation du premier modèle au niveau de chaque zone fonctionnelle, configurés pour déplacer, le long d'une direction normale à la surface externe, les points identifiés par les moyens d'identification, d'une distance de déplacement fonction de la position de chacun de ces points à l'intérieur de la zone fonctionnelle.

**15.** Programme d'ordinateur **caractérisé en ce qu'**il comprend des portions de code de programme pour l'exécution des étapes du procédé pour produire une représentation numérique pour fabriquer un appareil adapté à un objet selon l'une quelconque des revendications 1 à 7, lorsque ledit programme est exécuté par un dispositif pour produire une représentation numérique pour fabriquer un appareil adapté à un objet selon l'une quelconque des revendications 9 à 14.

**Patentansprüche**

**1.** Verfahren zur Erzeugung einer numerischen Darstellung zur Herstellung eines Gerätes, das an ein Objekt angepasst ist, das mindestens einen Teil eines lebenden Körpers bildet, umfassend:

(1) Empfangen eines ersten dreidimensionalen Modells der inneren und äußeren Struktur des Objekts in einem ersten dreidimensionalen Bezugssystem,
(2) Empfangen eines zweiten dreidimensionalen Modells des herzustellenden Gerätes, das mindestens einen Satz von Funktionsbereichen definiert, die für das Gerät charakteristisch sind, und optional eine Kontur des Gerätes, wobei das zweite Modell repräsentative Daten umfasst:

- Von Koordinaten in einem zweiten dreidimensionalen Bezugssystem von Randpunkten, die Teil des Randes eines Funktionsbereichs sind, und Scheitelpunkten, die Scheitel eines Funktionsbereichs darstellen,
- eines Wertes eines Verformungsparameters, der repräsentativ ist für die Verformung des Funktionsbereichs, der jedem Scheitelpunkt zugeordnet ist,
- optional, von Koordinaten im zweiten Bezugssystem von Punkten oder Konturlinien des Gerätes,

(3) Modifizieren des zweiten Modells, indem auf die Punkte des Modells eine Transformationsmatrix angewendet wird, die die Koordinaten dieser Punkte im ersten Bezugssystem ausdrückt, wobei die Transformationsmatrix so berechnet wird, dass sie den Markierungen, die für die innere Struktur des zusammenzustellenden Objekts charakteristisch sind, entspricht, die das zweite Bezugssystem des zweiten Modells mit denselben charakteristischen Markierungen definieren, die im ersten Modell vorhanden sind,
(4) Berechnen für jeden Funktionsbereich des zweiten Modells:

- Einer Randkurve, die durch die Randpunkte verläuft,
- einer Scheitelkurve, die durch die Scheitelpunkte verläuft,

(5) Transferieren, auf das erste Modell von Randkurven, der Scheitelkurven und der Werte der Verformungsparameter, die jedem Scheitelpunkt des zweiten Modells zugeordnet sind, um die Randkurven und Scheitelkurven unter Berücksichtigung der Werte der Verformungsparameter für diese zu positionieren, und optional die Punkte oder Konturlinien des Gerätes, auf der äußeren Umhüllung des ersten Modells,
(6) Verformen der äußeren Oberfläche des ersten Modells in Abhängigkeit der Scheitelkurven, um die äußere Oberfläche des ersten Modells mit der Form des zweiten Modells in jedem Funktionsbereich übereinzustimmen, und ein korrigiertes erstes Modell zu erhalten,
(7) optional, Anzeigen einer grafischen Darstellung des korrigierten ersten Modells,
(8) Speichern des korrigierten ersten Modells als endgültiges Modell in einem Computerspeicher.

**2.** Verfahren nach Anspruch 1, **dadurch gekennzeichnet, dass** es ferner umfasst, insbesondere nach Schritt (6):

Empfangen eines Korrekturkoeffizienten, der von einem Benutzer eingegeben wurde, der auf jeden Wert des Verformungsparameters anzuwenden ist, der einem Scheitelpunkt zugeordnet ist, Korrigieren der Werte des Verformungsparameters des ersten Modells für jeden der Scheitelpunkte, und Speichern der korrigierten Werte im Computerspeicher.

**3.** Verfahren nach Anspruch 1 oder 2, **dadurch gekennzeichnet, dass** es ferner umfasst: Transformieren des endgültigen Modells in einen Satz von Anweisungen, die verwendet werden können, um eine computergestützte Fertigungsmaschine zu steuern, zur Herstellung des Gerätes oder einer Form des Gerätes.

**4.** Verfahren nach einem der Ansprüche 1 bis 3, **dadurch gekennzeichnet, dass** der Schritt (1) des Empfangs eines ersten Modells der inneren und äußeren Struktur des Objekts die Generierung dieses ersten Modells durch ein Röntgenbildgebungsverfahren ausgehend von Bilddaten des Objekts umfasst, die insbesondere aus zwei Röntgenbildern der inneren Struktur und einem dreidimensionalen Bild der äußeren Struktur des Objekts hervorgegangen sind.

**5.** Verfahren nach Anspruch 4, **dadurch gekennzeichnet, dass** die Generierung des ersten Modells durch das Röntgenbildgebungsverfahren umfasst:

A. Empfangen von ersten Bilddaten, die in einem ersten dreidimensionalen Referenzbezugssystem generiert wurden, und repräsentativ sind für zwei zweidimensionale Röntgenbilder der inneren Struktur des Objekts, die in zwei nicht parallelen Aufnahmerichtungen aufgenommen wurden, B. Empfangen von zweiten Bilddaten, die in einem zweiten Referenzbezugssystem generiert wurden, und repräsentativ sind für ein dreidimensionales Bild einer äußeren Umhüllung des Objekts, C. wenn das erste und das zweite Referenzbezugssystem unterschiedlich sind, Transformieren der empfangenen Bilddaten in ein und dasselbe Referenzbezugssystem, D. Schätzen, ausgehend von den zweiten Bilddaten, der Koordinaten im Referenzbezugssystem für Markierungen, die für die innere Struktur charakteristisch sind, und optional, den Wert mindestens eines Parameters, der für die innere Struktur charakteristisch ist, E. Berechnen, im Referenzbezugssystem, der dreidimensionalen Form eines Modells, das die innere Struktur ausgehend von einem a priori bekannten generischen Modell der inneren Struktur darstellt, wobei dieses generische Modell Punkte beinhaltet, die den ersten Markierungen entsprechen, wobei das berechnete Modell durch Verformung des generischen Modells so erhalten wird, dass das berechnete Modell einer Form folgt, die einer Isometrie des generischen Modells so nahe wie möglich kommt, unter Beibehaltung der Übereinstimmung der Punkte des verformten generischen Modells mit den ersten Markierungen, und optional durch Anwendung der Parameter, die für die innere Struktur charakteristisch sind, auf das berechnete Modell, F. Auswählen von mindestens einer zweiten Markierung, die für die innere Struktur charakteristisch ist, die auf jedem der zwei Röntgenbilder zu lokalisieren ist, und optional, mindestens einer zweiten Markierung, die auf einem einzelnen Röntgenbild zu lokalisieren ist, und für jede zweite Markierung:

(i) Identifizieren eines Punktes, der zum Modell gehört, das in Schritt E) berechnet wurde und der zweiten Markierung entspricht, (ii) Berechnen der Koordinaten einer Projektion dieses Punktes auf dem (den) Röntgenbild(ern), (iii) Ermitteln, ausgehend von den ersten Bilddaten, der Koordinaten der zweiten Markierung auf dem Röntgenbild, indem sie in einem Suchbereich gesucht wird, der um die Projektionskoordinaten herum liegt,

G. Berechnen der Koordinaten der zweiten Markierung im Referenzbezugssystem ausgehend von ihren Koordinaten auf mindestens einem der Röntgenbilder, das in Schritt F) ermittelt wurde, H. Korrigieren des Modells, das in Schritt E) berechnet wurde, indem Punkte des berechneten Modells, die den zweiten Markierungen entsprechen, mit den Koordinaten der in Schritt G) berechneten übereingestimmt werden, I. Rekonstruieren eines Modells der inneren und äußeren Struktur des Objekts mit den Modelldaten, die in Schritt H) korrigiert wurden, und den Daten des dreidimensionalen Bildes der äußeren Umhüllung des Objekts, die im Referenzbezugssystem ausgedrückt werden.

**6.** Verfahren nach einem der Ansprüche 1 bis 5, **dadurch gekennzeichnet, dass** der Schritt (2) des Empfangs des zweiten Modells umfasst:

Vergleichen der inneren Struktur des ersten Modells mit bekannten inneren Strukturen, die vorgängig erfasst wurden,

Identifizieren der bekannten inneren Struktur, die der inneren Struktur des ersten Modells am nächsten kommt,

Auswählen eines Gerätemodells, das für die identifizierte bekannte innere Struktur angepasst ist.

7. Verfahren nach einem der Ansprüche 1 bis 6, **dadurch gekennzeichnet, dass** mindestens ein Schritt, der aus dem Transferschritt (5) und dem Verformungsschritt (6) ausgewählt wird, wie folgt definiert ist:

- Der Transferschritt (5) umfasst:

(i) Projizieren der Randkurve und der Scheitelkurve jedes Funktionsbereichs des zweiten Modells auf die äußere Oberfläche des ersten Modells und Berechnen der Koordinaten der Randkurve und der Scheitelkurve, die auf die äußere Oberfläche im ersten Modell projiziert wurden,

(ii) Korrigieren der Koordinaten jedes Scheitelpunkts der projizierten Scheitelkurve, der einem Wert des Verformungsparameters zugeordnet ist, in Abhängigkeit von diesem Wert,

(iii) optional, Projizieren der Punkte oder Konturlinien des zweiten Modells auf die äußere Oberfläche des ersten Modells und Berechnen der Koordinaten der projizierten Punkte oder Konturlinien,

- der Verformungsschritt (6) umfasst:

(i) Identifizieren der Punkte der äußeren Oberfläche des ersten Modells, die innerhalb jeder Randkurve liegen, die auf die äußere Oberfläche projiziert wird,

(ii) Verformen des ersten Modells auf dem Niveau jedes Funktionsbereichs, indem entlang einer Richtung, die senkrecht zur äußeren Oberfläche ist, die in (i) identifizierten Punkte um eine Verschiebungsdistanz in Abhängigkeit der Position jeder dieser Punkte innerhalb des Funktionsbereichs verschoben werden.

8. Computerlesbares Medium (118), das Anweisungen enthält, die codiert sind, um von einer Prozessorschaltung interpretierbar zu sein, und von dieser ausgeführt werden können, um das Verfahren nach einem der Ansprüche 1 bis 7 auszuführen.

9. Vorrichtung (100) zur Erzeugung einer numerischen Darstellung zur Herstellung eines Gerätes, das an ein Objekt angepasst ist, das mindestens einen Teil eines lebenden Körpers bildet, **dadurch gekennzeichnet, dass** sie umfasst:

- Mittel zum Empfangen (108) eines ersten dreidimensionalen Modells der inneren und äußeren Struktur des Objekts in einem ersten dreidimensionalen Bezugssystem,

- Mittel zum Empfangen (108) eines zweiten dreidimensionalen Modells des herzustellenden Gerätes mindestens einen Satz von Funktionsbereichen definiert, die für das Gerät charakteristisch sind, und optional, eine Kontur des Gerätes, wobei das zweite Modell repräsentative Daten umfasst:

- Von Koordinaten in einem zweiten dreidimensionalen Bezugssystem von Randpunkten, die Teil des Randes eines Funktionsbereichs sind, und Scheitelpunkten, die Scheitel eines Funktionsbereichs darstellen,

- eines Wertes eines Verformungsparameters, der repräsentativ ist für die Verformung des Funktionsbereichs, der jedem Scheitelpunkt zugeordnet ist,

- optional, von Koordinaten im zweiten Bezugssystem von Punkten oder Konturlinien des Gerätes,

- Mittel zum Modifizieren (108) des zweiten Modells, indem auf die Punkte des Modells eine Transformationsmatrix angewendet wird, die die Koordinaten dieser Punkte im ersten Bezugssystem ausdrückt, wobei die Transformationsmatrix so berechnet wird, dass sie den Markierungen, die für die innere Struktur des zusammenzustellenden Objekts charakteristisch sind, entspricht, die das zweite Bezugssystem des zweiten Modells mit denselben charakteristischen Markierungen definieren, die im ersten Modell vorhanden sind,

- Mittel zur Berechnung (108), für jeden Funktionsbereich des zweiten Modells:

- Einer Randkurve, die durch die Randpunkte verläuft,

- einer Scheitelkurve, die durch die Scheitelpunkte verläuft,

- Mittel zum Transfer (108), auf das erste Modell der Randkurven, von Scheitelkurven und Werten von Verformungsparametern, die jedem Scheitelpunkt des zweiten Modells zugeordnet sind, um die Randkurven und Scheitelkurven unter Berücksichtigung der Werte der Verformungsparameter für diese zu positionieren, und optional, von Punkten oder Konturlinien des Gerätes auf der äußeren Umhüllung des ersten Modells,
- Mittel zur Verformung (108) der äußeren Oberfläche des ersten Modells unter Verwendung der Scheitelkurven, um die äußere Oberfläche des ersten Modells mit der Form des zweiten Modells in jedem Funktionsbereich übereinzustimmen, und ein korrigiertes erstes Modell zu erhalten,
- Mittel zum Anzeigen (102) einer grafischen Darstellung des korrigierten ersten Modells,
- Mittel zum Speichern (108) des korrigierten ersten Modells als endgültiges Modell in einem Computerspeicher (110).

10. Vorrichtung (100) nach Anspruch 9, **dadurch gekennzeichnet, dass** sie ferner umfasst:

Mittel zum Empfangen eines Korrekturkoeffizienten, der von einem Benutzer eingegeben wurde, der auf jeden Wert des Verformungsparameters anzuwenden ist, der einem Scheitelpunkt zugeordnet ist,
Mittel zum Korrigieren der Werte des Verformungsparameters des ersten Modells für jeden der Scheitelpunkte, und
Mittel zum Speichern der korrigierten Werte im Computerspeicher.

11. Vorrichtung (100) nach Anspruch 9 oder 10, **dadurch gekennzeichnet, dass** sie ferner eine oder mehrere der folgenden Eigenschaften umfasst:

Mittel zur Transformation des endgültigen Modells in einen Satz von Anweisungen, die verwendet werden können, um eine computergestützte Fertigungsmaschine zu steuern, zur Herstellung des Gerätes oder einer Form des Gerätes,
Mittel zur Generierung des ersten Modells durch ein Röntgenbildgebungsverfahren ausgehend von Bilddaten des Objekts, die insbesondere aus zwei Röntgenbildern der inneren Struktur und einem dreidimensionalen Bild der äußeren Struktur des Objekts hervorgegangen sind,
optional umfassen diese Mittel zur Generierung des ersten Modells:

- Mittel (21) zum Empfang von Bilddaten zum Empfangen von ersten Bilddaten, die in einem dreidimensionalen Bezugssystem generiert wurden, die für mindestens ein zweidimensionales Röntgenbild der inneren Struktur des Objekts repräsentativ sind, und von zweiten Bilddaten, die in einem dreidimensionalen Bezugssystem generiert wurden, die für ein dreidimensionales Bild einer äußeren Umhüllung des Objekts repräsentativ sind,
- Mittel (22) zur Bearbeitung, die mit den Empfangsmitteln verbunden sind, die eingerichtet sind, um mindestens die Schritte C) bis I) des Verfahrens nach Anspruch 5 vorzunehmen,
- Übertragungsmittel (23).

12. Vorrichtung (100) nach einem der Ansprüche 9 bis 11, **dadurch gekennzeichnet, dass** die Empfangsmittel des zweiten Modells umfassen:

Mittel zum Vergleich der inneren Struktur des ersten Modells mit bekannten inneren Strukturen, die vorgängig erfasst wurden,
Mittel zur Identifizierung der bekannten inneren Struktur, die der inneren Struktur des ersten Modells am nächsten kommt,
Mittel zur Auswahl eines Gerätemodells, das an die identifizierte bekannte innere Struktur angepasst ist.

13. Vorrichtung (100) nach einem der Ansprüche 9 bis 12, **dadurch gekennzeichnet, dass** die Transfermittel umfassen:

- Mittel zur Projektion der Randkurve und der Scheitelkurve jedes Funktionsbereichs des zweiten Modells auf die äußere Oberfläche des ersten Modells, und Mittel zum Berechnen der Koordinaten der Randkurve und der Scheitel, die im ersten Modell auf die äußere Oberfläche projiziert werden,
- Mittel zur Korrektur der Koordinaten jedes Scheitelpunkts der projizierten Scheitelkurve, dem ein Wert des Verformungsparameters in Abhängigkeit von diesem Wert zugeordnet ist,
- optional, Mittel zur Projektion der Punkte oder Konturlinien des zweiten Modells auf die äußere Oberfläche des ersten Modells, und Mittel zum Berechnen der Koordinaten der projizierten Punkte oder Konturlinien.

14. Vorrichtung (100) nach Anspruch 13, **dadurch gekennzeichnet, dass** die Verformungsmittel umfassen:

- Mittel zur Identifizierung der Punkte der äußeren Oberfläche des ersten Modells, die innerhalb jeder Randkurve liegen, die auf die äußere Oberfläche projiziert wird,
- Mittel zur Verformung des ersten Modells auf dem Niveau jedes Funktionsbereichs, die konfiguriert sind, um, entlang einer Richtung, die senkrecht zur äußeren Oberfläche ist, die durch die Identifikationsmittel identifizierten Punkte um eine Verschiebungsdistanz in Abhängigkeit der Position jedes dieser Punkte innerhalb des Funktionsbereichs zu verschieben.

15. Computerprogramm, **dadurch gekennzeichnet, dass** es Programmcodeabschnitte zum Ausführen von Verfahrensschritten zum Erzeugen einer numerischen Darstellung zur Herstellung eines Gerätes umfasst, das an ein Objekt nach einem der Ansprüche 1 bis 7 angepasst ist, wenn das Programm von einer Vorrichtung zur Erzeugung einer numerischen Darstellung zur Herstellung eines Gerätes ausgeführt wird, das an ein Objekt nach einem der Ansprüche 9 bis 14 angepasst ist.

## Claims

1. A method for producing a digital representation for manufacturing an appliance adapted to an object forming at least one portion of a living body, comprising:

   (1) receiving a first three-dimensional model of the internal and external structure of the object in a first three-dimensional frame of reference,
   (2) receiving a second three-dimensional model of the appliance to be manufactured defining at least one set of functional areas characteristic of the appliance and optionally a contour of the appliance, the second model comprising data representative of:

   - coordinates in a second three-dimensional frame of reference of edge points forming part of the edge of a functional area and vertex points representing vertices of a functional area,
   - a value of a deformation parameter, representative of the deformation of the functional area, associated with each vertex point,
   - optionally, coordinates in the second frame of reference of points or contour lines of the appliance,

   (3) changing the second model by applying a transformation matrix, which expresses the coordinates of these points in the first frame of reference, to the points of the model, the transformation matrix being calculated so as to match characteristic reference marks of the internal structure of the object to be fitted defining the second frame of reference of the second model with the same characteristic reference marks present in the first model,
   (4) calculating for each functional area of the second model:

   - an edge curve passing through the edge points,
   - a vertex curve passing through the vertex points,

   (5) transferring, onto the first model, the edge curves, the vertex curves and the deformation parameter values associated with each vertex point of the second model, in order to position the edge curves and the vertex curves taking into account the values of the deformation parameters for the latter and optionally the contour points or lines of the appliance, onto the outer envelope of the first model,
   (6) deforming the outer surface of the first model depending on the vertex curves to conform the outer surface of the first model to the shape of the second model in each functional area and obtain a first corrected model,
   (7) optionally, displaying a graphical representation of the first corrected model,
   (8) saving the first corrected model in a computer memory as a final model.

2. The method according to claim 1, **characterised in that** it further comprises, in particular after step (6) :

   receiving a correction coefficient entered by a user to be applied to each value of the deformation parameter associated with a vertex point,
   correcting the values of the deformation parameter of the first model for each of the vertex points, and
   saving the corrected values in the computer memory.

3. The method according to claim 1 or 2, **characterised in that** it further comprises
   transforming the final model into a set of instructions that can be used to control a computerassisted manufacturing machine, in order to manufacture the appliance or a mould of the appliance.

4. The method according to any one of claims 1 to 3, **characterised in that** the step (1) of receiving a first model of the internal and external structure of the object comprises the generation of this first model by a radiographic imaging method from image data of the object, in particular from two radiographic images of the internal structure and a three-dimensional image of the external structure of the object.

5. The method according to claim 4, **characterised in that** the generation of the first model by the radiographic imaging method comprises:

A. receiving first image data generated in a first three-dimensional reference frame of reference, representative of two two-dimensional radiographic images of the internal structure of the object captured according to two non-parallel imaging directions,

B. receiving second image data generated in a second reference frame of reference, representative of a three-dimensional image of an outer envelope of the object,

C. when the first and second reference frames of reference are different, transforming the received image data into one and the same reference frame of reference,

D. estimating, from the second image data, the coordinates in the reference frame of reference of first characteristic reference marks of the internal structure, and, optionally, the value of at least one parameter characteristic of the internal structure,

E. calculating, in the reference frame of reference, the three-dimensional shape of a model representing said internal structure from a generic model known a priori to said internal structure, this generic model including points corresponding to the first reference marks, the calculated model being obtained by deformation of the generic model so that said calculated model follows a shape as close as possible to an isometry of the generic model while maintaining the points of the deformed generic model in coincidence with the first reference marks, and optionally by applying the characteristic parameter(s) of the internal structure to the calculated model,

F. choosing at least one second characteristic reference mark of the internal structure to be located on each of the two radiographic images, and optionally, at least one second reference mark to be located on a single radiographic image, and for each second reference mark:

(i) identifying a point belonging to the model calculated in step E) corresponding to the second reference mark,

(ii) calculating the coordinates of a projection of this point on the radiographic image(s),

iii) determining, from the first image data, the coordinates of the second reference mark on the radiographic image by searching for it in a search area located around the coordinates of the projection,

G. calculating the coordinates of the second reference marks in the reference frame of reference from their coordinates on at least one of the radiographic images determined in step F,

H. correcting the model calculated in step E by making points of the calculated model, corresponding to the second reference marks, coincide with the coordinates thereof calculated in step G,

I. reconstructing a model of the internal and external structure of the object with the data from the model corrected in step H) and the data from the three-dimensional image of the outer envelope of the object expressed in the reference frame of reference.

6. The method according to any one of claims 1 to 5, **characterised in that** step (2) of receiving the second model comprises:

comparing the internal structure of the first model with known internal structures which are previously listed,

identifying the known internal structure which is closest to the internal structure of the first model,

choosing a model of appliance adapted to the identified known internal structure.

7. The method according to any one of claims 1 to 6, **characterised in that** at least one step chosen from the transfer step (5) and the deformation step (6) is defined as follows:

- the transfer step (5) comprises:

(i) projecting the edge curve and the vertex curve of each functional area of the second model onto the outer surface of the first model and calculating the coordinates of the edge curve and the vertex curve which are projected onto the outer surface in the first model,
(ii) correcting the coordinates of each vertex point of the projected vertex curve to which a deformation parameter value is associated depending on this value,
(iii) optionally projecting the points or contour lines of the second model onto the outer surface of the first model and calculating the coordinates of the projected points or contour lines,

- the deformation step (6) comprises:

(i) identifying the points of the outer surface of the first model which are located inside each edge curve projected onto the outer surface,
(ii) deforming the first model at each functional area, by displacing, along a direction normal to the outer surface, the points identified in (i) by a displacement distance depending on the position of each of these points inside the functional area.

8.  A computer readable medium (118), containing coded instructions to be interpretable by a processor circuit and executed by the latter in order to execute the method according to any one of claims 1 to 7.

9.  A device (100) for producing a digital representation to manufacture an appliance adapted to an object forming at least one portion of a living body, **characterised in that** it comprises:

- means for receiving (108) a first three-dimensional model of the internal and external structure of the object in a first three-dimensional frame of reference,
- means (108) for receiving a second three-dimensional model of the appliance to be manufactured defining at least one set of functional areas characteristic of the appliance and optionally a contour of the appliance, the second model comprising data representative of:
- coordinates in a second three-dimensional frame of reference of edge points forming part of the edge of a functional area and vertex points representing vertices of a functional area,
- a value of a deformation parameter, representative of the deformation of the functional area, associated with each vertex point,
- optionally, coordinates in the second frame of reference of points or contour lines of the appliance,
- means (108) for changing the second model by applying, to the points of the models, a transformation matrix which expresses the coordinates of these points in the first frame of reference, the transformation matrix being calculated so as to match characteristic reference marks of the internal structure of the object to be fitted defining the second frame of reference of the second model with the same characteristic reference marks present in the first model,
- means (108) for calculating, for each functional area of the second model:
- an edge curve passing through the edge points,
- a vertex curve passing through the vertex points,
- means (108) for transferring, onto the first model, the edge curves, the vertex curves and the deformation parameter values associated with each vertex point of the second model, in order to position the edge curves and the vertex curves taking into account the values of the deformation parameters for the latter and optionally the contour points or lines of the appliance, onto the outer envelope of the first model,
- means for deforming (108) the outer surface of the first model using the vertex curves to conform the outer surface of the first model to the shape of the second model in each functional area and obtain a first corrected model,
- means (102) for displaying a graphical representation of the first corrected model,
- means (108) for saving the first corrected model in a computer memory (110) as a final model.

10. The device (100) according to claim 9, **characterised in that** it further comprises:

means for receiving a correction coefficient entered by a user to be applied to each value of the deformation parameter associated with a vertex point,
means for correcting the values of the deformation parameter of the first model for each of the vertex points, and
means for saving the corrected values in the computer memory.

11. The device (100) according to claim 9 or 10 **characterised in that** it further comprises one or more of the following features:

means for transforming the final model into a set of instructions that can be used to control a computerassisted manufacturing machine, in order to manufacture the appliance or a mould of the appliance,
means for generating the first model by a radiographic imaging method from image data of the object, in particular from two radiographic images of the internal structure and a three-dimensional image of the external structure of the object,
optionally, these means for generating the first model comprise:

- means (21) for receiving image data to receive first image data generated in a three-dimensional frame of reference, representative of at least one two-dimensional radiographic image of the internal structure of the object, and second image data generated in a three-dimensional frame of reference representative of a three-dimensional image of an outer envelope of the object,
- processing means (22) connected to the receiving means arranged to perform at least steps C to I of the method according to claim 5,
- transmission means (23).

12. The device (100) according to any one of claims 9 to 11, **characterised in that** the means for receiving the second model comprise:

means for comparing the internal structure of the first model with known internal structures which are previously listed,
means for identifying the known internal structure which is closest to the internal structure of the first model,
means for selecting a model of appliance adapted to the identified known internal structure.

13. The device (100) according to any one of claims 9 to 12, **characterised in that** the transfer means comprise:

- means for projecting the edge curve and the vertex curve of each functional area of the second model onto the outer surface of the first model and means for calculating the coordinates of the edge and vertex curves which are projected onto the outer surface in the first model,
- means for correcting the coordinates of each vertex point of the projected vertex curve to which a deformation parameter value is associated depending on this value,
- optionally, means for projecting the points or contour lines of the second model onto the outer surface of the first model and means for calculating the coordinates of the projected points or contour lines.

14. The device (100) according to claim 13, **characterised in that** the deformation means comprise:

- means for identifying the points of the outer surface of the first model which are located inside each edge curve projected onto the outer surface,
- means for deforming the first model at each functional area, which are configured to displace, along a direction normal to the outer surface, the points identified by the identification means, by a displacement distance depending on the position of each of these points inside the functional area.

15. A computer program **characterised in that** it comprises portions of program code for the execution of the steps of the method for producing a digital representation to manufacture an appliance adapted to an object according to any one of claims 1 to 7, when said program is executed by a device for producing a digital representation to manufacture an appliance adapted to an object according to any one of claims 9 to 14.

Fig.1

EP 3 803 806 B1

# Fig.2

$I_{3D}$

# Fig.3

R1
R4
R3
R12
R11
R6
R5
$I_{3D}$
R7
R8
R10
R9
R2

# Fig.4

M

# Fig.5

$I_{2Da}$
$I_{2Db}$
M"

Fig.6a

Fig.6b

Fig.7

Fig.8

**Fig.9**

**Fig.10**

**Fig.11a**

**Fig.11b**

**Fig.12**

CPb_1
Cb_1
Cs_1
0
Zone'_1
$A_1$
$S_{ext}$

O
CPb_1
**Fig.13**
$A_1$
$S_{ext}$

IS(M1)
Zone_1
**Fig.14**
Zone_3
$S_{ext}$
$M_f$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8634626 B2
- WO 2007043036 A
- FR 2749402 A
- FR 2754068 A

**Littérature non-brevet citée dans la description**

- **JULIEN CLIN.** *Correlation Between Immédiate In-Brace Correction and Biomechanical Effectiveness of Brace Treatment in Adolescent Idiopathic Scoliosis*
- **MICHONSKI et al.** Automatic récognition of surface landmarks of anatomical structures of back and posture. *J Biomed Opt.,* Mai 2012, vol. 17 (5), 056015
- **BERTRAND et al.** Estimation of external and internal human body dimensions from few external measurements. *Journal of Musculoskeletal Research,* 2009, vol. 12 (4), 191-204
- **CAMPBELL-KYUREGHYAN N ; JORGENSEN M ; BURR D ; MARRAS W.** *Clin Biomech (Bristol, Avon),* Juin 2005, vol. 20 (5), 455-64
- An automatic modeling of human bodies from sizing parameters. **SEO et al.** SI3D '03: Proceedings of the 2003 symposium on Interactive 3D graphies. ACM Press, 2003, 19-26
- **HWANG et al.** Rapid Development of Diverse Human Body Models for Crash Simulations through Mesh Morphing. *SAE Technical Paper,* 2016
- **CLOSKEY, R. F. ; SCHULTZ, A. B. ; LUCHIES, C. W.** A model for studies of the deformable rib cage. *Journal of Biomechanics,* 1992, vol. 25, 529-539
- **FENG A. ; CASAS D. ; SHAPIRO A.** *Proceeding MIG '15 Proceedings of the 8th ACM SIGGRAPH Conférence on Motion in Games,* 57-64
- **MOURA et al.** Fast 3D reconstruction of the spine from biplanar radiographs using a déformable articulated model. *Med Eng Phys.,* Octobre 2011, vol. 33 (8), 924-33
- **BERNARD CHAZELLE.** Triangulating a simple polygon in linear time. *Discrete Comput. Geom.,* 1991, vol. 6, 485-524